(19) Europäisches Patentamt
European Patent Office
Office européen des brevets

(11) **EP 3 685 301 B1**

(12) **EUROPÄISCHE PATENTSCHRIFT**

(45) Veröffentlichungstag und Bekanntmachung des Hinweises auf die Patenterteilung:
**20.10.2021 Patentblatt 2021/42**

(21) Anmeldenummer: **18762057.0**

(22) Anmeldetag: **27.08.2018**

(51) Int Cl.:
**G06F 21/64** *(2013.01)* **H04L 9/32** *(2006.01)*

(86) Internationale Anmeldenummer:
**PCT/EP2018/072989**

(87) Internationale Veröffentlichungsnummer:
**WO 2019/057444 (28.03.2019 Gazette 2019/13)**

(54) **BIDIREKTIONAL VERKETTETE ERWEITERTE BLOCKCHAIN-STRUKTUR**

BIDIRECTIONALLY LINKED EXTENDED BLOCKCHAIN STRUCTURE

STRUCTURE DE CHAÎNE DE BLOCS ÉTENDUE CONCATÉNÉE DE MANIÈRE BIDIRECTIONNELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.09.2017 DE 102017216839**

(43) Veröffentlichungstag der Anmeldung:
**29.07.2020 Patentblatt 2020/31**

(73) Patentinhaber: **Bundesdruckerei GmbH
10969 Berlin (DE)**

(72) Erfinder:
• **WILKE, Andreas
13509 Berlin (DE)**
• **KOMAROV, Ilya
13507 Berlin (DE)**

(74) Vertreter: **Richardt Patentanwälte PartG mbB
Wilhelmstraße 7
65185 Wiesbaden (DE)**

(56) Entgegenhaltungen:
• **Narayanan Arvind ET AL: "Bitcoin and Cryptocurrency Technology - Sections: 1.2, 2.4, 3.4, 3.5", , 9. Februar 2016 (2016-02-09), XP055521119, Gefunden im Internet: URL:https://web.archive.org/web/2017060207 5829/https://d28rh4a8wq0iu5.cloudfront.net /bitcointech/readings/princeton_bitcoin_bo ok.pdf [gefunden am 2018-11-05]**
• **JUAN GARAY ET AL: "The Bitcoin Backbone Protocol: Analysis and Applications", INTERNATIONAL ASSOCIATION FOR CRYPTOLOGIC RESEARCH,, Bd. 20170307:173827, 7. März 2017 (2017-03-07), Seiten 1-43, XP061022599, DOI: 10.1007/978-3-662-46803-6_10 [gefunden am 2017-03-07]**

**Beschreibung**

Die Erfindung betrifft ein Verfahren und ein elektronisches Datenspeichersystem zum Speichern von Daten. Insbesondere betrifft die Erfindung ein Verfahren und ein elektronisches Datenspeichersystem zum manipulationssicheren Speichern von Daten in einer bidirektional verketteten Blockchain-Struktur.

Die Möglichkeit einer Veränderung oder gar gezielten Manipulation von digital codierten Daten in elektronischen Speichern stellt eine technische Herausforderung dar.

Aus dem Stand der Technik sind Blockchain-Strukturen, d. h. Blockketten-Strukturen, zur Sicherung von Daten bekannt. Bei diesen Blockchain-Strukturen handelt es sich um unidirektional verketteten Blockchain-Strukturen. Beispielsweise werden entsprechende Blockchain-Strukturen verwendet, um Transaktionen von Kryptowährungen, wie etwa dem Bitcoin-Zahlungssystem, zu protokollieren.

Eine Blockchain-Struktur stellt dabei eine erweiterbare Liste von Datensätzen bereit, welche in Blöcken angeordnet sind. Die Integrität der einzelnen Blöcke wird im Stand der Technik durch eine unidirektionale Verkettung unter Verwendung kryptografischer Prüfwerten der einzelnen Blöcke in Form von Hashwerten gesichert. Dadurch, dass jeder Block eine kryptografische Prüfwert des vorangehenden Blocks inklusive des in dem vorangehenden Block gespeicherten kryptografischen Prüfwerts umfasst, ergibt sich eine Verkettung der Blöcke. Dabei umfasst jeder Block einen Prüfwert, welcher auf den Inhalten aller vorangehenden Blöcke beruht. Somit ist es schwer, eine solche Blockchain nachträglich zu manipulieren, da hierzu nicht nur ein einzelner Block manipuliert werden müsste, sondern alle nachfolgenden Blöcke, weil der Prüfwert jedes nachfolgenden Blocks unter anderem auf dem zu manipulierenden Block beruht. Wird der zu manipulierende Block tatsächlich manipuliert, so ändert sich sein Prüfwert. Dieser geänderte Prüfwert passt nicht mehr zu den Prüfwerten der nachfolgenden Blöcke, wodurch die Manipulation erkennbar wird und bei einer Prüfung mittels der Prüfwerte auffällt.

Bekannte Blockchain-Strukturen implementieren allerdings lediglich eine unidirektionale Verkettung und damit Absicherung der Daten, da bei der Verkettung jeweils nur Dateninhalte vorangehender Blöcke berücksichtigt werden. So lässt sich anhand der Verkettung prüfen, ob ein vorangehender Block einer vorgelegten Blockchain-Struktur manipuliert wurde. Es lässt sich jedoch nicht prüfen, ob die vorgelegten Blockchain-Struktur vollständig ist. Insbesondere lässt sich nicht prüfen, ob möglicherweise ein Teil der Blockchain-Struktur abgeschnitten wurde. Ferner lässt sich nicht prüfen, ob der letzte Block manipuliert wurde.

Bei der Prüfung und Absicherung von Blockchain-Struktur kommen ferner gängige Hashverfahren zum Einsatz. Einzelne Blöcke der Blockchain-Struktur werden über Hashwerte unidirektional miteinander verknüpft. Damit man eine solche Blockchain-Struktur mit unidirektional miteinander verknüpften Blöcken auf Manipulation prüfen kann, benötigt man sowohl sämtliche Informationen der einzelnen Blöcke als auch ihren jeweiligen Hashwert. Des Weiteren macht es eine Prüfung einer solchen Blockchain-Struktur erforderlich mit dem ersten Block der entsprechenden Blockchain-Struktur zu beginnen und mit dem letzten Block aufhören.

Das Buch "Bitcoin and Cryptocurrency Technologies" von Arvind Narayanan et al., Entwurf vom 9. Februar 2016, beschreibt in den Kapiteln 1.2, 2.4, 3.4 und 3.5 Hashzeiger und Datenstrukturen, Anreize und den "Proof of Work" bzw. Arbeitsnachweis für das Bitcoin-Kryptowährungssystem sowie Bitcoin-Blöcke und das Bitcoin-Netzwerk.

Der Erfindung liegt die Aufgabe zugrunde, ein verbessertes Verfahren zum manipulationssicheren Speichern von Daten zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum manipulationssicheren Speichern von Daten in einem elektronischen Speicher unter Verwendung einer bidirektional verketteten Blockchain-Struktur, wobei das Verfahren umfasst:

- Bereitstellen der bidirektional verketteten Blockchain-Struktur,
- Bereitstellen der zu speichernden Daten,
- Bereitstellen einer ersten Funktionenschar, welche eine Mehrzahl von Funktionen umfasst, wobei sich die Funktionen in mindestens einem ersten Parameter unterscheiden und unter Verwendung des jeweiligen ersten Parameters eindeutig identifizierbar sind,
- Erzeugen eines zusätzlichen Blocks zum Erweitern der Blockchain-Struktur, welcher die zu speichernden Daten umfasst und dazu vorgesehen ist mit dem letzten Block der Blockchain-Struktur bidirektional verkettet zu werden, wobei der letzte Block der Blockchain-Struktur gespeicherte Daten umfasst,
- Erstellen einer ersten blockabhängigen bidirektionalen Verkettungsfunktion zum bidirektionalen Verketten des letzten Blocks mit dem zusätzlichen Block, wobei das Erstellen der ersten Verkettungsfunktion umfasst:

    o Berechnen zumindest eines ersten Prüfwerts für den letzten und den zusätzlichen Block unter Verwendung der in dem letzten Block gespeicherten Daten und der in dem zusätzlichen Block zu speichernden Daten,
    o Auswählen einer ersten Funktion der ersten Funktionenschar in Abhängigkeit von dem ersten Prüfwert gemäß einer ersten eindeutigen Zuordnungsbedingung zwischen dem ersten Parameter der ausgewählten ersten Funktion und dem ersten Prüfwert,

 ○ Verwenden der ausgewählten ersten Funktion zum Erstellen der ersten blockabhängigen bidirektionalen Verkettungsfunktion,

- Bidirektionales Verketten des letzten Blocks mit dem zusätzlichen Block, wobei das bidirektionale Verketten umfasst:

 ○ Hinzufügen der ersten blockabhängigen bidirektionalen Verkettungsfunktion zu dem letzten Block,
 ○ Hinzufügen der ersten blockabhängigen bidirektionalen Verkettungsfunktion zu dem zusätzlichen Block,

- Speichern der um den zusätzlichen Block erweiterten Blockchain-Struktur.

Ausführungsformen können den Vorteil haben, dass sie es ermöglichen, eine bidirektional verkettete Blockchain-Struktur bereitzustellen, deren Blöcke mittels blockabhängiger bidirektionaler Verkettungsfunktionen miteinander verkettet sind. Die Verkettung ermöglicht dabei eine bidirektionale Prüfung der Blockchain-Struktur auf Echtheit bzw. Manipulation. Dabei kann die Blockchain-Struktur nicht nur in einer Richtung, sondern in zwei Richtung geprüft werden.

Unter einer Blockchain-Struktur wird eine Datenstruktur verstanden, welche einen Blockchain bildet. Unter einer "Blockchain" wird eine geordnete Datenstruktur verstanden, welche eine Mehrzahl von miteinander verketteten Datenblöcken umfasst. Insbesondere wird unter einer Blockchain eine Datenbank verstanden, deren Integrität, d.h. Sicherung gegen nachträgliche Manipulation, durch Speicherung eines Prüfwerts, wie etwa eines Hashwertes, des vorangehenden Datensatzes in dem jeweils nachfolgenden Datensatz gesichert ist. Der Prüfwert ist dabei dem Inhalt des vorangehenden Datensatzes zugeordnet und charakterisiert diesen eindeutig. Wird der Inhalt des vorangehenden Datensatzes verändert, so erfüllt dieser nicht mehr das Prüfmerkmal, woraus die Veränderung ersichtlich wird. Im Falle von bekannten Blockchain-Strukturen wird etwa jeder Block der Blockchain eindeutig durch einen Hash-Wert identifiziert und referenziert einen Vorgängerblock in der Blockchain, dessen Hash-Wert er umfasst.

Für Beispiele einer Blockchain vergleiche https://en.wikipedia.org/wiki/Block_chain_(database) und "Mastering Bitcoin", Chapter 7, The Blockchain, Seite 161 ff. Das Konzept der Blockchains wurde beispielsweise im Jahre 2008 in einem White Paper unter dem Pseudonym Satoshi Nakamoto im Kontext der Kryptowährung Bitcoin beschrieben ("Bitcoin: Peer-to-Peer Electronic Cash System" (https://bitcoin.org/bitcoin.pdf)). In diesem Ausführungsbeispiel enthält jeder Block der Blockchain in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke nicht möglich ist, ohne auch alle nachfolgenden Blöcke ebenfalls zu modifizieren.

Die Sicherheit einer Blockchain-Struktur kann beispielsweise dadurch erhöht werden, dass sie veröffentlicht wird bzw. allgemein zugänglich ist und somit ein Vergleich einer vorliegenden Kopie der Blockchain-Struktur mit weiteren veröffentlichten bzw. zugänglichen Kopien derselben Blockchain-Struktur ermöglicht wird.

Ein Prüfwert für Daten ist ein den entsprechenden Daten zugeordneter Wert, welcher die Daten derart eindeutig charakterisiert, dass die Integrität der Daten anhand des Prüfwerts überprüft werden kann. Beispielsweise errechnet sich der Prüfwert aus den entsprechenden Daten. Ein Prüfwert in Form einer Prüfsumme stellt beispielsweise einen Wert bereit, welcher aus den entsprechenden Daten als Ausgangsdaten berechnet wurde und dazu konfiguriert ist, zumindest einen Bitfehler in den Daten zu erkennen. Je nachdem wie komplex die Berechnungsvorschrift für die Prüfsumme ist, können mehr als ein Fehler erkannt oder auch korrigiert werden. Bekannte Prüfwerte bzw. Prüfsummen können beispielsweise auf einem Aufsummieren von Datenwerten, einer Berechnung einer Quersumme, eines Paritätsbits, eines gewichteten Mittelwerts der Daten oder auf komplexeren Berechnungsverfahren beruhen, wie etwa einer zyklische Redundanzprüfung oder der Verwendung einer Hashfunktion.

Ein Prüfwert kann für einen oder mehrere Blöcke einer Blockchain-Struktur berechnet werden. Ein solcher Prüfwert wird im Folgenden auch als blockabhängiger Prüfwert bezeichnet. Beispielsweise wird der Prüfwert aus den in einem Block gespeicherten bzw. zu speichernden Daten berechnet. Beispielswiese wird jeweils ein Prüfwert für zwei aufeinanderfolgende Blöcke der Blockchain-Struktur berechnet und aus den beiden resultierenden Prüfwerten ein gemeinsamer kombinierter Prüfwert. Beispielsweise werden die in den beiden aufeinanderfolgenden Blöcken gespeicherten bzw. zu speichernden Daten miteinander kombiniert und aus den kombinierten Daten ein gemeinsamer Prüfwert berechnet. Beispielsweise werden die Daten oder Prüfwerte unter Verwendung einer arithmetischen Verknüpfung miteinander kombiniert, wie Addition, Subtraktion, Multiplikation und/oder Division handeln.

Eine blockabhängige Verkettungsfunktion bezeichnet eine Funktion, welche zumindest eine Variable umfasst und von mindestens einem blockabhängigen Prüfwert abhängt. Beispielseise umfasst die blockabhängige Verkettungsfunktion den blockabhängigen Prüfwert als Parameter. Eine blockabhängige bidirektionale Verkettungsfunktion bezeichnet eine Funktion, welche zumindest eine Variable umfasst und von den Prüfwerten zweier aufeinanderfolgender Blöcke abhängt. Beispielsweise wird für jeden der beiden Blöcke jeweils ein Prüfwert berechnet und die blockabhängige bidirektionale Verkettungsfunktion abhängt von beiden Prüfwerten ab. Beispielsweise umfasst sie beide Prüfwerte als Parameter. Beispielsweise wird für jeden der beiden Blöcke jeweils ein Prüfwert berechnet und die beiden resultierenden Prüfwerte werden zu einem gemeinsamen Prüfwert kombiniert, von welchem die blockabhängige bidirektionale Verkettungsfunktion abhängt. Beispielsweise umfasst die blockabhängige bidirektionale Verkettungsfunktion den gemeinsamen Prüfwert als Parameter. Beispielsweise wird werden die von den beiden Blöcken umfassten Daten bzw. Nutzdaten miteinander kombiniert und ein gemeinsamer Prüfwert aus den kombinierten Daten berechnet. In diesem Fall hängt die blockabhängige bidirektionale Verkettungsfunktion beispielsweise von dem gemeinsamen Prüfwert ab. Beispielsweise umfasst sie den gemeinsamen Prüfwert als Parameter.

Im Falle einer unidirektional verketteten Blockchain-Struktur wird ein Prüfwert unter Verwendung eines Blocks der Blockchain-Struktur berechnet und zu einem mit diesem Block unidirektional zu verkettenden zusätzlichen Block hinzugefügt. Durch dieses Hinzufügen entsteht eine unidirektionale Verkettung. Anhand des hinzugefügten Prüfwerts kann die Integrität des Blocks bzw. der Daten des Blocks geprüft werden, mit welchem der zusätzliche Block unidirektional verkettet ist. Hierzu wird beispielsweise unter Verwendung der Daten des zu überprüfenden Blocks der Prüfwert nachgerechnet und mit dem von dem hinzugefügten Prüfwert verglichen. Stimmen beide Prüfwerte überein, ist die Integrität des Blocks bzw. der Daten des entsprechenden Blocks gewahrt, mit welchem der zusätzliche Block unidirektional verkettet ist. Diese Verkettung ist unidirektional da eine Prüfung von Daten nur in einer Richtung ermöglicht wird: Anhand des zu dem zusätzlichen Block hinzugefügten Prüfwertes kann die Integrität des vorangehenden Blocks geprüft werden. Jedoch kann nicht anhand irgendeiner von dem vorangehenden Block umfassten Information die Integrität des nachfolgenden Blocks, d.h. des zusätzlichen Blocks, geprüft werden.

Im Falle der bidirektional verketteten Blockchain-Struktur gemäß Ausführungsformen wird eine blockabhängige bidirektionale Verkettungsfunktion berechnet. Diese blockabhängige bidirektionale Verkettungsfunktion ist sowohl von den Daten beider miteinander bidirektional verketteten Blöcken abhängig. Beispielsweise wird die blockabhängige bidirektionale Verkettungsfunktion zu jedem der beiden Blöcke jeweils hinzugefügt. Anhand der blockabhängigen bidirektionalen Verkettungsfunktion kann somit die Integrität beider Blöcke bzw. der Daten beider Blöcke geprüft werden. Hierzu wird beispielsweise unter Verwendung der Daten beider Blöcke die blockabhängige bidirektionale Verkettungsfunktion nachgerechnet und mit der zu einem der beiden Blöcke hinzugefügten blockabhängige bidirektionale Verkettungsfunktion verglichen. Stimmen die berechnete und die bereitgestellte blockabhängige bidirektionale Verkettungsfunktion überein, ist die Integrität beider Blöcke bzw. der Daten beider Blöcke gewahrt. Ausgangspukt der Prüfung können dabei beide Blöcke sein, da beide Blöcke jeweils die blockabhängige bidirektionale Verkettungsfunktion umfassen. Eine Prüfung der Daten wird somit in beide Richtungen ermöglicht: Anhand der zu dem zusätzlichen Block hinzugefügten blockabhängige bidirektionale Verkettungsfunktion kann die Integrität des vorangehenden Blocks geprüft werden. Ebenso kann anhand der von dem vorangehenden Block umfassten blockabhängige bidirektionale Verkettungsfunktion Integrität des nachfolgenden Blocks, d.h. des zusätzlichen Blocks, geprüft werden.

Wird eine bidirektionale Verkettungsfunktion also sowohl zu dem zusätzlichen Block hinzugefügt als auch zu dem Block, mit welchem der zusätzliche Block bidirektional verkettet wird, so kann eine Integritätsprüfung auch auf Basis der zu dem entsprechenden Block der Blockchain-Struktur hinzugefügten bidirektionalen Verkettungsfunktion erfolgen. Mit anderen Worten kann bei einer bidirektionalen Verkettung zweier Blöcke eine Integritätsprüfung sowohl ausgehend von der in einem ersten der beiden Blöcke gespeicherten bidirektionalen Verkettungsfunktion ausgeführt werden, als auch ausgehend von der in dem zweiten der beiden Blöcke gespeicherten bidirektionalen Verkettungsfunktion.

Eine zusätzliche Konsistenzprüfung kann beispielsweise darin bestehen zu prüfen, ob beide bidirektional miteinander verknüpften Blöcke dieselbe blockabhängige bidirektionale Verkettungsfunktion umfassen.

Anhand einer blockabhängigen bidirektionalen Verkettungsfunktion kann im Gegensatz zu bekannten unidirektional verketteten Blockchain-Strukturen beispielswiese auch erkannt werden, ob die Blockchain-Struktur abgeschnitten wurde. Da die Prüfwerte im Fall bekannter unidirektional verketteter Blockchain-Strukturen jeweils nur Informationen über vorangehende Blöcke umfassen, kann auf Basis eines solchen Prüfwerts nicht erkannt werden, ob nachfolgende Blöcke existieren. Somit kann auch nicht erkannt werden, wenn nachfolgende Blöcke im Zuge einer Manipulation verändert, ersetzt oder entfernt werden. Demgegenüber umfasst eine blockabhängige bidirektionale Verkettungsfunktion gemäß Ausführungsformen, jeweils Informationen über beide miteinander verkettete Blöcke. Ferner wird die Verkettungsfunktion zu jedem der beiden entsprechenden Blöcke hinzugefügt. Wird ein hinzugefügter Block im Zuge einer Manipulation verändert, ersetzt oder entfernt, so kann dies anhand der blockabhängigen bidirektionalen Verkettungsfunktion des vorausgehenden Blocks erkannt werden, mit welchem der hinzugefügte Block bidirektional verkettet ist.

Eine Funktionenschar bezeichnet eine Mehrzahl von Funktionen, welche sich in mindestens einem Parametern unterscheiden. Bei den Funktionen kann es sich um ein- oder mehrdimensionale Funktionen handeln, d.h. die Funktionen können ein oder mehr Variablen umfassen. Beispielsweise unterscheiden sich die Funktionen in einem Parameter. Beispielsweise unterscheiden sich die Funktionen in n Parametern, wobei die n-Parameter ein n-Tupel bilden. Beispielsweise ist n = 2, d.h. die Funktionen unterscheiden sich in zwei Parametern. Funktionen der Funktionenschar sind anhand der Parameter in denen sie sich unterscheiden eindeutig identifizierbar. Die Funktionen der Funktionenschar sind beispielsweise Elemente eines Funktionenraums und können durch ein Funktional, d.h. eine Funktion auf Funktionen, beschrieben werden.

Ein Parameter bezeichnet eine funktionsindividuelle Konstante, d.h. einen Wert der von Funktion zu Funktion der Funktionenschar variieren kann, für eine bestimmte Funktion aber stets festgelegt bzw. konstant ist. Bei einem Parameter kann es sich beispielsweise um einen Summanden, Minuenden, Subtrahenden, Faktor, Dividenden, Divisor oder Exponenten handeln.

Bei der Zuordnungsbedingung beschreibt das Verhältnis zwischen Prüfwert(en) und Parameter(en) der ausgewählten Funktion. Beispielsweise werden ein oder mehrere Prüfwerte berechnet und durch die Zuordnungsbedingung für jeden der Prüfwerte ein Parameter bestimmt. Diejenige Funktion einer Funktionenschar, welche die entsprechenden Parameter aufweist bzw. durch die entsprechenden Parameter identifiziert wird, wird zum Erstellen der ersten blockabhängigen bidirektionalen Verkettungsfunktion ausgewählt.

Bei der Zuordnungsbedingung kann es sich beispielsweise eine Identität handeln. Das heißt, diejenige Funktion, welche als Parameter die berechneten Prüfwerte aufweist, wird ausgewählt. Die Zuordnungsbedingung kann auch durch eine lineare Funktion oder eine nichtlineare Funktion, wie etwa ein Polynom, gegeben sein. Durch eine lineare Funktion kann beispielsweise ein Offset eingeführt werden, um zu vermeiden, dass Parameterwerte kleiner als der entsprechende Offset verwendet werden. Dadurch kann beispielsweise sichergestellt werden, dass die ausgewählten Funktionen ein Mindestmaß an Komplexität aufweisen.

Aus dem Stand der Technik ist bekannt, wie man mit Hilfe spezieller Funktionen, wie etwa Hashfunktionen, aus beliebigen Daten bzw. Informationen eine Zahl, d.h. einen Prüfwert, generiert. Ausführungsformen können den Vorteil haben, aus den Daten bzw. Informationen statt Zahlen, analytische Funktionen generiert werden. Hierzu dienen die Zahlen beispielsweise als Zwischenergebnis, am Ende steht jedoch eine Verkettungsfunktion. Ausführungsformen können somit den Vorteil haben, aus digitalisierten Informationen in Abhängigkeit von den Ausgangsinformationen eine analytische Funktion zu generieren. Hierzu wird aus den Informationen zunächst eine Zahl, ein Zahlenpaar oder ein n-Tupel an Zahlen bzw. Prüfwerten generiert. Im nächsten Schritt wird (werden) diese Zahl (Zahlen) bzw. Prüfwerte verwendet zur Bestimmung von ein oder mehreren Parametern einer Funktion. Aus Daten bzw. Informationen werden dabei Funktionen generiert, mit denen in einem nächsten Schritt Funktionalisierungen durch analytische Operationen realisiert werden könne. Beispielsweise dienen die Funktionen als Verkettungsfunktionen von Datenblöcken, welche dazu verwendet werden können, die Integrität der entsprechenden Datenblöcke zu prüfen und zu belegen. Aus beliebigen digitalisierten Informationen können so über Parameter eindeutige analytische Funktion generiert werden, welche als Prüffunktionen dienen können.

Nach Ausführungsformen umfasst das Verwenden der ausgewählten ersten Funktion zum Erstellen der ersten blockabhängigen bidirektionalen Verkettungsfunktion ein Verwenden der ausgewählten Funktion als erste blockabhängige bidirektionale Verkettungsfunktion. Nach Ausführungsformen ist also die ausgewählte Funktion identisch zu der ersten blockabhängigen bidirektionalen Verkettungsfunktion. Ausführungsformen können den Vorteil haben, dass durch Verwendung der ausgewählten Funktion als erste blockabhängige bidirektionale Verkettungsfunktion eine effektive bidirektionale Verkettung der Blöcke implementiert werden kann. Unter Verwendung der blockabhängigen bidirektionalen Verkettungsfunktion kann effektive die Integrität der Daten der Blöcke geprüft werden, von deren Werten bzw. Prüfwerten die Verkettungsfunktion abhängt.

Nach Ausführungsformen ist der erste Prüfwert ein kombinierter Prüfwert, welcher sowohl von den in dem letzten Block gespeicherten Daten als auch von den in dem zusätzlichen Block zu speichernden Daten abhängt. Beispielsweise werden die Daten miteinander kombiniert und der Prüfwert unter Verwendung der kombinierten Daten berechnet. Nach einer alternativen Ausführungsform wird für jeden der Blöcke jeweils ein Prüfwert berechnet und die beiden resultierenden Prüfwerte zu dem kombinierten Prüfwert kombiniert. Ausführungsformen können den Vorteil haben, dass die Informationen über den Inhalt der Daten zweier Blöcke in einer Funktion zusammengefasst werden können.

Nach Ausführungsformen sind die Daten in den Blöcken der Blockchain-Struktur jeweils in einer quadratische-Matrixstruktur gespeichert, wobei T eine natürliche Zahl größer-gleich zwei ist, wobei das Berechnen des ersten Prüfwerts umfasst:

 ○ Berechnen einer Summe über jede Spalte einer ersten Matrixstruktur, welche von den beiden Matrixstrukturen der in dem letzten Block gespeicherten Daten und der in dem zusätzlichen Block zu speichernden Daten bereitgestellt wird,
 ○ Berechnen einer Summe über jede Zeile einer zweiten Matrixstruktur, welche von den beiden Matrixstrukturen der in dem letzten Block gespeicherten Daten und der in dem zusätzlichen Block zu speichernden Daten bereitgestellt wird,
 ○ Berechnen der kombinierten Summe aus der Summe der i-ten Spalte und der Summe der i-ten Zeile, wobei i eine natürliche Zahl ist und von 1 bis T läuft,
 ○ Bilden des ersten blockabhängigen Prüfwerts durch Verknüpfen der kombinierten Summen miteinander.

Ausführungsformen können den Vorteil haben, dass durch unterschiedliche Summationsregeln für die beiden miteinander zu verkettenden Blöcken, beispielsweise einerseits eine Summenbildung über die einzelnen Spalten und andererseits eine Summenbildung über die einzelnen Zeilen, der resultierende kombinierte Prüfwert nicht nur Informationen über die Daten der miteinander zu verkettenden Blöcke umfasst, sondern auch Informationen über deren Reihenfolge. Wird die Reihenfolge der beiden Blöcke vertauscht, so erfolgt beispielsweise für den vormals vorangehenden Block keine spalten-, sondern eine zeilenweise Summenbildung, während für den vormals nachfolgenden, nun aber vorangehenden Block eine spaltenweise statt eine zeilenweise Summenbildung erfolgt.

Nach Ausführungsformen können die miteinander zu verkettenden Blöcke auch Matrixstrukturen unterschiedlicher Größe aufweisen. Beispielsweise sind die Daten eines Blocks in einer (VxW)-Matrixstruktur gespeichert, während die Daten des anderen Blocks in einer (XxY)-Matrixstruktur gespeichert sind, wobei V, W, X, Y natürliche Zahlen größer-gleich zwei sind. In diesem Fall kann für die Bildung des kombinierten Prüfwerts bestimmt werden, welche der Zahlen V, W, X, oder Y am größten ist, die Anzahl an Zeilen V oder X oder die Anzahl an Spalten W oder Y. Falls die Zeilen- und Spaltenzahlen identisch sind, sind keine zusätzlichen Verfahrensschritte notwendig. Ist die Anzahl der Spalten und/oder Zeilen für die beiden Matrixstrukturen unterschiedlich werden die Matrixstrukturen jeweils um so viele Zeilen und/oder Spalten erweitert, dass alle Spalten- und Zeilenzahlen identisch mit der zuvor bestimmten größten Zahl sind. Dabei wird allen ergänzten Matrixelementen ein festgelegter Platzhalterwert zugeordnet, z. B. der Wert 0. Im Ergebnis erhält man so zwei quadratische Matrixstrukturen identischer Größe, auf welche das zuvor genannte Verfahren für quadratische (TxT)-Matrixstrukturen angewendet werden kann.

Nach Ausführungsformen umfasst das Verknüpfen der kombinierten Summen miteinander ein Aneinanderreihen der kombinierten Summen. Ausführungsformen können den Vorteil haben, dass sie ein einfaches und eindeutiges Verfahren zum Bilden des kombinierten Prüfwerts bereitstellen.

Nach Ausführungsformen unterscheiden sich die Funktionen der ersten Funktionenschar in einer Mehrzahl von n Parametern und sind unter Verwendung der jeweiligen n Parameter, welche ein n-Tupel von Parametern bilden, eindeutig identifizierbar, wobei die n-Tupel von Parametern jeweils den ersten Parameter umfassen, wobei das Erstellen der ersten blockabhängigen bidirektionalen Verkettungsfunktion ferner umfasst:

    o Berechnen eines n-Tupels von ersten Prüfwerten für den letzten und den zusätzlichen Block unter Verwendung der in dem letzten Block gespeicherten Daten und der in dem zusätzlichen Block zu speichernden Daten, wobei das n-Tupel den ersten Prüfwert umfasst,
    o Auswählen der ersten Funktion der ersten Funktionenschar in Abhängigkeit von dem n-Tupel von Prüfwerten gemäß einer ersten eindeutigen Zuordnungsbedingung zwischen dem n-Tupel von Parametern der ausgewählten ersten Funktion und dem n-Tupel von Prüfwerten.

Ein n-Tupel $(x_1, ..., x_n)$ bezeichnet eine Zusammenfassung von n mathematischen Objekten, hier beispielsweise Prüfwerten oder Parametern, in einer Liste. Dabei müssen die mathematischen Objekte dabei nicht notwendigerweise voneinander verschieden sein und ihre Reihenfolge ist maßgeblich. Mit anderen Worten zwei n-Tupel, welche jeweils dieselben mathematischen Objekten, sind verschieden voneinander, wenn die Reihenfolge der Objekte verschieden ist. Das an der i-ten Stelle stehende Objekt $x_i$ heißt dabei i-te Komponente des Tupels.

Ausführungsformen können den Vorteil haben, dass beispielsweise für jeden der beiden miteinander zu verknüpfenden Blöcke jeweils ein Prüfwert berechnet wird. Beispielweise kann es sich bei dem n-Tupel um ein 2-Tupel, d.h. ein geordnetes Paar, welches aus den beiden Prüfwerten besteht. Ausführungsformen können ferner den Vorteil haben, dass eine Mehrzahl von Prüfwerten pro Block berechnet werden kann, beispielswiese n/2 Prüfwerte. Somit können beispielsweise jeweils Prüfwerte für bestimmte Teilbereiche der Blöcke berechnet werden. Dies kann zum Beispiel den Vorteil haben, dass einzelne Teilbereiche durch einen eigenständigen Prüfwert gesichert werden können. Ferner kann bereits die Zuordnung einzelner Prüfparameter zu einzelnen Teilbereichen die Komplexität der Erzeugung der ersten blockabhängigen bidirektionalen Verkettungsfunktion und damit die Sicherheit erhöhen.

Nach Ausführungsformen umfasst das Verfahren ferner:

•      Bereitstellen einer zweiten Funktionenschar, welche eine Mehrzahl von Funktionen umfasst, wobei sich die Funktionen in mindestens einem zweiten Parameter unterscheiden und unter Verwendung des zweiten Parameters jeweils eindeutig identifizierbar sind,

wobei das Erstellen der ersten blockabhängigen bidirektionalen Verkettungsfunktion ferner umfasst:

    o Berechnen eines zweiten Prüfwerts unter Verwendung der in dem zusätzlichen Block zu speichernden Daten, wobei das Berechnen des ersten Prüfwerts unter Verwendung der in dem letzten Block gespeicherten Daten erfolgt,
    o Auswählen einer zweiten Funktion der zweiten Funktionenschar in Abhängigkeit von dem zweiten Prüfwert gemäß einer zweiten eindeutigen Zuordnungsbedingung zwischen dem zweiten Parameter der ausgewählten zweiten Funktion und dem zweiten Prüfwert,

o Verwenden der ausgewählten zweiten Funktion zum Erstellen der ersten blockabhängigen bidirektionalen Verkettungsfunktion, wobei die erste blockabhängige bidirektionale Verkettungsfunktion eine eindeutige Kombination der ersten und zweiten ausgewählten Funktion umfasst.

Ausführungsformen können den Vorteil haben, dass für jeden der beiden bidirektional miteinander zu verkettenden Blöcke, d.h. des zusätzlichen Blocks und des letzten Blocks der Blockchain-Struktur, jeweils eine individuelle blockabhängige Funktion, i.e. die erste und zweite ausgewählte Funktion, bestimmt werden. Jede dieser beiden Funktion ermöglicht für sich genommen eine unilaterale Verkettung. Aus der Kombination der beiden Funktionen ergibt sich die blockabhängige bidirektionale Verkettungsfunktion, welche eine bidirektionale Verkettung implementiert, wenn Sie in den beiden Blöcken gespeichert wird. Bei der Kombination kann es sich beispielsweise um Verknüpfungen, wie etwa arithmetische Verknüpfungen, handeln. Solch arithmetische Verknüpfungen können beispielsweise Addition, Subtraktion, Multiplikation und/oder Division umfassen.

Nach Ausführungsformen umfasst die erste Zuordnungsbedingung und/oder die zweite Zuordnungsbedingung jeweils eine lineare Funktion. Ausführungsformen können den Vorteil haben, dass durch eine lineare Zuordnungsbedingung, z.B. der Form $P_{1/2} = m \cdot PW_{1/2} + t$, wobei $P_{1/2}$ den ersten/zweiten Parameter, $PW_{1/2}$ den ersten/zweiten Prüfwert, $m$ eine Steigung und $t$ einen Minimalwert bezeichnen, sichergestellt werden kann, dass der ersten und/oder zweiten Parameter einen stets größer gleich einem Minimalwert sind. Dadurch kann beispielsweise gewährleistet werden, dass die ausgewählten ersten und/oder zweiten Funktionen eine bestimmte Mindestkomplexität aufweist. Ferner kann durch eine lineare Zuordnungsbedingung der Abstand zwischen den ersten und/oder zweiten Parameter relativ zu dem Abstand zwischen den zugrundeliegenden ersten und/oder zweiten Prüfwerten erhöht werden. Dadurch kann gewährleistet werden, dass sich die resultierenden ersten und/oder zweiten Funktionen sich für unterschiedliche zugrundeliegende Prüfwerte deutlich voneinander unterscheiden.

Nach Ausführungsformen umfasst die erste Zuordnungsbedingung und/oder die zweite Zuordnungsbedingung eine Identität. Ausführungsformen können den Vorteil haben, dass der erste und/oder zweite Prüfwert als erster und/oder zweiter Parameter in die erste und/oder zweite Funktion eingeht.

Nach Ausführungsformen umfassen die Funktionen der ersten Funktionenschar und/oder die Funktionen der zweiten Funktionenschar jeweils ein Polynom, wobei der erste Parameter und/oder der zweite Parameter der Grad der Polynome ist. Ausführungsformen können den Vorteil haben, dass eine effizientes und effektives Verfahren zum Bestimmen der ersten und/oder zweiten Funktion bereitgestellt wird.

Nach Ausführungsformen handelt es sich bei den von den Funktionen der ersten Funktionenschar und/oder den Funktionen der zweiten Funktionenschar umfassten Polynomen um Hermitesche Polynome, Legendre Polynome, Laguerre Polynome, Tschebyschow Polynome oder um Polynome diskreter Fourier Transformationen. Ausführungsformen können den Vorteil haben, dass eine effizientes und effektives Verfahren zum Bestimmen der ersten und/oder zweiten Funktion bereitgestellt wird.

Beispielsweise handelt es sich um Hermitesche Polynome $H_n(x)$ der Form

$$H_n(x) = \sum_{k=0}^{\lfloor n/2 \rfloor} \frac{(-1)^k n!}{(n-2k)! k!} (2x)^{n-2k}$$

, wobei der Prüfwert als Parameter $n$ oder eine lineare Funktion des Prüfwerts als Parameter $n$ verwendet wird. Beispielsweise handelt es sich um Legendre Polynome $P_n(x)$ der Form

$$P_n(x) = \sum_{k=0}^{\lfloor n/2 \rfloor} (-1)^k \frac{(2n-2k)!}{(n-k)!(n-2k)! k! 2^n} x^{n-2k}$$

, wobei der Prüfwert als Parameter $n$ oder eine lineare Funktion des Prüfwerts als Parameter $n$ verwendet wird. Beispielsweise handelt es sich um Laguerre Polynome $L_n(x)$ der

Form $$L_n(x) = \sum_{k=0}^{\infty} (-1)^k \binom{n}{k} \frac{n!}{k!} (x)^k$$ , wobei der Prüfwert als Parameter $n$ oder eine lineare Funktion des Prüfwerts als Parameter $n$ verwendet wird. Beispielsweise handelt es sich um Tschebyschow Polynome, wie etwa Tschebyschow Poly-nome $T_n(x)$ erster Art der Form

$$T_n(x) = \frac{\left(x+\sqrt{x^2-1}\right)^n + \left(x-\sqrt{x^2-1}\right)^n}{2}$$ oder Tschebyschow Poly-nome $U_n(x)$ zweiter Art der Form

$$U_n(x) = \begin{cases} \dfrac{\sin((n+1)\arccos x)}{\sqrt{1-x^2}} & \text{für } |x|<1 \\ \dfrac{\sinh((n+1)\arccos x)}{\sqrt{x^2-1}} & \text{für } |x|>1 \end{cases}$$ , wobei der Prüf-wert als Parameter $n$ oder eine lineare Funktion des Prüfwerts als Parameter $n$ verwendet wird. Beispielsweise handelt es sich um Polynome diskreter Fourier Transformationen $g(x)$ der Form $$g(x) = \sum_{k=-n}^{n} c_k e^{ikx}$$ , wobei der Prüfwert als Parameter $n$ oder eine lineare Funktion des Prüfwerts als Parameter $n$ verwendet wird. Beispielsweise wird der Realteil Re $[g(x)]$, der Imaginärteil Im $[g(x)]$, oder der Betrag $|g(x)|$ verwendet.

Nach Ausführungsformen umfassen die Funktionen der ersten Funktionenschar und/oder die Funktionen der zweiten Funktionenschar jeweils eine Kugelflächenfunktion, wobei der erste Parameter und/oder der zweite Parameter ein Index der Kugelflächenfunktionen ist. Ausführungsformen können den Vorteil haben, dass eine effizientes und effektives Verfahren zum Bestimmen der ersten und/oder zweiten Funktion bereitgestellt wird. Beispielsweise handelt es sich um Kugelflächenfunktionen $Y_{lm}(\vartheta, \varphi)$ der Form

$$Y_{lm}(\vartheta, \varphi) = \frac{1}{\sqrt{2\pi}} N_{lm} P_{lm} (\cos\vartheta)e^{im\varphi}$$

mit $N_{lm} = \sqrt{\frac{2l+1}{2} \cdot \frac{(l-m)!}{(l+m)!}}$ und

$$P_{lm}(x) = \frac{(-1)}{2^l l!} (1-x^2)^{\frac{m}{2}} \frac{d^{l+m}}{dx^{l+m}} (x^2-1)^l$$

, wobei der Prüfwert als Parameter l oder eine lineare Funktion des Prüfwerts als Parameter l verwendet wird. Beispielsweise wird der Realteil Re $[Y_{lm}(\vartheta, \varphi)]$, der Imaginärteil Im $[Y_{lm}(\vartheta, \varphi)]$, oder der Betrag $|Y_{lm}(\vartheta, \varphi)|$ verwendet.

Nach Ausführungsformen umfassen die Funktionen der ersten Funktionenschar und/oder die Funktionen der zweiten Funktionenschar jeweils eine Gaußfunktion, wobei der erste Parameter und/oder der zweite Parameter die Breite der Gaußfunktionen ist. Ausführungsformen können den Vorteil haben, dass eine effizientes und effektives Verfahren zum Bestimmen der ersten und/oder zweiten Funktion bereitgestellt wird. Beispielsweise handelt es sich um Gaußfunktionen der

Form $G_n(x) = e^{-\frac{1}{2}n(x-a)^2}$, wobei der Prüfwert als Breite bzw. Parameter n oder eine lineare Funktion des Prüfwerts als Parameter n verwendet wird

Nach Ausführungsformen umfasst der letzte Block der Blockchain-Struktur ferner eine zweite blockabhängige bidirektionale Verkettungsfunktion der bidirektionalen Verkettung des letzten Blocks mit einem vorletzten Block der Blockchain-Struktur.

Das Hinzufügen der ersten blockabhängigen bidirektionalen Verkettungsfunktion zu dem letzten Block umfasst ein Verknüpfen der ersten Verkettungsfunktion mit der zweiten Verkettungsfunktion. Beispielsweise wird eine Kombination aus der ersten Verkettungsfunktion und der zweiten Verkettungsfunktion gebildet. Bei der Kombination kann es sich beispielsweise um Verknüpfungen, wie etwa arithmetische Verknüpfungen, handeln. Solch arithmetische Verknüpfungen können beispielsweise Addition, Subtraktion, Multiplikation und/oder Division umfassen.

Nach Ausführungsformen umfasst das Berechnen des ersten und/oder zweiten Prüfwerts ein Anwenden einer Hashfunktion auf die in dem letzten Block gespeicherten Daten und/oder die in dem zusätzlichen Block zu speichernden Daten. Ausführungsformen können den Vorteil haben, dass ein effizientes und effektives Verfahren zum Berechnen des ersten und/oder zweiten Prüfwerts bereitgestellt wird.

Nach Ausführungsformen sind aufeinanderfolgende Blöcke der bidirektional verketteten Blockchain-Struktur jeweils bidirektional miteinander verkettet, wobei zwei bidirektional miteinander verkettete Blöcke jeweils beide eine gemeinsame blockabhängige bidirektionale Verkettungsfunktion umfassen, wobei die gemeinsame blockabhängige bidirektionale Verkettungsfunktion jeweils von den in beiden bidirektional miteinander verketteten Blöcke gespeicherten Daten abhängig ist.

Nach Ausführungsformen umfasst das Verfahren ferner ein Erstellen einer verkürzten Kopie der bidirektional verketteten Blockchain-Struktur, wobei in der verkürzten Blockchain-Struktur gegenüber der Blockchain-Struktur um zumindest ein inneres Kettensegment verkürzt ist, wobei das innere Kettensegment zumindest einen Block umfasst, wobei zwei verbleibende direkte Nachbarblöcke der verkürzten Blockchain-Struktur, zwischen denen das innere Kettensegment entnommen wurde, mit einer kombinierten bidirektionalen Verkettungsfunktion verketten werden, welche eine Kombination aller blockabhängigen bidirektionalen Verkettungsfunktionen der Blöcke des entnommen inneren Kettensegments umfasst.

Nach Ausführungsformen umfasst das entfernte innere Kettensegment eine Mehrzahl von Blöcken der bidirektional verketteten Blockchain-Struktur.

Ausführungsformen können den Vorteil haben, dass durch Verkürzen der Blockchain-Struktur beispielsweise Speicherplatz gespart werden kann. Ausführungsformen können ferner den Vorteil haben, dass durch die Verkürzung der Blockchain-Struktur beispielsweise Blöcke mit sicherheitssensiblen Daten entnommen werden können, um diese vor unautorisierten Zugriffen zu schützen. Die Verwendung der kombinierten bidirektionalen Verkettungsfunktion ermöglicht es die entnommenen Blöcke später auf ihre Authentizität bzw. Integrität hin zu prüfen. Werden entnommene Blöcke später bzw. zusätzlich zur Verfügung gestellt, so kann anhand der kombinierten bidirektionalen Verkettungsfunktion geprüft werden, ob es sich tatsächlich um die entnommenen Blöcke handelt. Ferner kann, kombinierten bidirektionalen Verkettungsfunktion festgestellt werden, zu welcher Blockchain-Struktur die entnommenen Blöcke gehören. Die kombinierte bidirektionale Verkettungsfunktion stellt somit eine Art Fingerabdruck. Derartige Möglichkeiten können insbesondere vorteilhaft sein, falls die in den Blöcken der Blockchain-Struktur gespeicherten Daten verschlüsselt sind.

Ausführungsformen können somit den Vorteil haben, dass die Blockchain-Struktur verkürzt werden kann, ohne dass die blockabhängigen Informationen über die Verkettungen der entnommenen Blöcke verloren gehen. Bei der Kombination der blockabhängigen Verkettungsfunktionen der Blöcke des inneren Verkettungssegments kann es sich beispielsweise um Verknüpfungen, wie etwa arithmetische Verknüpfungen, handeln. Solch arithmetische Verknüpfungen können beispielsweise Addition, Subtraktion, Multiplikation und/oder Division umfassen. Die blockabhängigen Verkettungsfunktionen sind jeweils abhängig von Dateninhalten der Blöcke, welche sie verketten, bzw. von Dateninhalten, welche diesen Blöcke eindeutig zugeordnet sind. Als Kombination aller blockabhängigen Verkettungsfunktionen der Blöcke des inneren Kettensegments umfasst die kombinierte bidirektionale Verkettungsfunktion, welche die beiden nach der Entnahme des inneren Kettensegments verbleibenden Blöcke ohne direkte Verkettung miteinander verkettet, somit Informationen über alle Dateninhalte aller zwischen den entsprechenden Blöcken entnommenen Blöcke des inneren Kettensegments.

Nach Ausführungsformen umfasst das Verfahren ferner:

- Bereitstellen des entnommenen inneren Kettensegments,
- Prüfen der Authentizität und/oder Vollständigkeit des bereitgestellten inneren Kettensegments, wobei die Prüfung einen Vergleich der kombinierten bidirektionalen Verkettungsfunktion der beiden verbleibenden direkten Nachbarblöcke der verkürzten Blockchain-Struktur mit einer Kombination aller blockabhängigen bidirektionalen Verkettungsfunktionen der Blöcke des bereitgestellten inneren Kettensegments umfasst.

Ausführungsformen können den Vorteil haben, dass die Möglichkeit geschaffen wird, sicherheitskritische Informationen aus der Blockchain-Struktur zu entnehmen, während die verbleibende verkürzte Blockchain-Struktur zugleich weiterhin prüfbar bleibt.

Nach Ausführungsformen wird, auf eine erfolgreiche Prüfung der Authentizität und/oder Vollständigkeit des bereitgestellten inneren Kettensegments hin, die verkürzte Blockchain-Struktur um das bereitgestellte innere Kettensegment ergänzt und die kombinierte bidirektionale Verkettungsfunktion zwischen den beiden verbleibenden direkten Nachbarblöcke der verkürzten Blockchain-Struktur wird jeweils durch die ursprünglichen blockabhängigen bidirektionalen Verkettungsfunktionen der beiden Nachbarblöcke zu dem entnommen inneren Kettensegment ersetzt.

Ausführungsformen können den Vorteil haben, dass ein effizientes Verfahren zum Wiederherstellen einer der vollständigen Blockchain-Struktur aus einer verkürzten Blockchain-Struktur bereitgestellt wird. Nach Ausführungsformen können auch nur ein oder mehrere verkürzte Abschnitte der Blockchain-Struktur selektiv vervollständigt werden.

Nach Ausführungsformen umfassen die zu speichernden Daten Daten, welche kennzeichnend für den Inhalt eines digital codierten Dokuments sind, wobei das Bereitstellen der zu speichernden Daten ein Empfangen der Daten mittels einer Kommunikationsschnittstelle über ein Netzwerk von einem das digital codierte Dokument erstellenden Computersystem umfasst, wobei das Verfahren ferner umfasst:

- Empfangen einer Anfrage nach einer aktuellen Version der Blockchain-Struktur mittels der Kommunikationsschnittstelle über das Netzwerk von einem anfragenden Computersystem,
- Versenden der erweiterten Blockchain-Struktur mittels der Kommunikationsschnittstelle über das Netzwerk an das anfragende Computersystem in Antwort auf die empfangene Anfrage.

Ausführungsformen können den Vorteil haben, dass anhand der in der Blockchain-Struktur eingetragenen Daten die Integrität eines digital codierten Dokuments geprüft werden kann. Für ein vorliegendes digital codiertes Dokument können Daten, welche kennzeichnend für den Inhalt dieses Dokuments sind, berechnet werden. Beispielsweise kann ein Hashwert des Inhalts des digital codierten Dokuments berechnet werden. Diese Daten können mit der Blockchain-Struktur verglichen werden: Umfasst die Blockchain-Struktur die entsprechenden Daten, wird die Integrität des digitalen codierten Dokuments bestätigt und dieses als authentisch anerkannt. Umfasst die Blockchain-Struktur die entsprechenden Daten nicht, wird die Integrität des digital codierten Dokuments verneint. Die Blockchain-Struktur kann hierbei den Vorteil bieten, dass deren Größe kompakt gehalten werden kann, wenn diese nur Hashwerte der digital codierten Dokumente umfasst. Ferner können anhand der Hashwerte der digital codierten Dokumente keine Rückschlüsse auf die Inhalte der entsprechenden Dokumente gezogen werden, wodurch die Sicherheit erhöht wird. Schließlich kann eine aktuelle Version der Blockchain-Struktur beispielsweise auf ein tragbares mobiles Telekommunikationsgerät über das Netzwerk heruntergeladen und zur Prüfung von digital codierten Dokumenten selbst dann genutzt werden, wenn keine Netzwerkverbindung zur Verfügung steht, d.h. sich das tragbare mobile Telekommunikationsgerät in einem Offline-Modus befindet.

Unter einem "Dokument" wird insbesondere eine Nachrichtenmeldung, ein Text, eine Urkunde, ein Zeugnis, oder ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem Dokument um ein Machine-Readable Travel Document, wie beispielsweise von der Internationalen Luftfahrtbehörde (ICAO) und/oder dem BSI standardisiert, handeln. Eine Urkunde ist eine Erklärung in Text- oder Schriftform, welche einen bestimmten Tatbestand bzw.

Sachverhalt fixiert. Zudem kann die Urkunde den Aussteller der Urkunde identifizieren.

Unter einem digital codierten Dokument wird ein Datenkonstrukt zur elektronischen Datenverarbeitung verstanden, welches digital codierte Daten umfasst. Hierbei kann es sich insbesondere um eine elektronische Datei eines beliebigen Dateiformats handeln, wie etwa eine Text-, Tabellen-, Ton- Bild- und/oder Videodatei. Nach Ausführungsformen kann die elektronische Datei ausführbar oder nicht ausführbar sein. Bei einem digital codierten Dokument kann es sich um beispielsweise um ein Dokument handeln, welche durch Digitalisieren eines Dokuments mit physischen Dokumentenkörper, d.h. eine Umwandlung der von dem physischen Dokumentenkörper umfassten Daten in einen Binärcode, in Dateiform angelegt oder überführt wurden. Insbesondere ist die Gültigkeit eines solchen Dokuments unabhängig von dem Vorhandensein eines fest zugeordneten Dokumentenkörpers.

Nach Ausführungsformen wird kann ein digital codiertes Dokument beispielsweise erstellt werden, indem eine Datei mit den Daten des entsprechenden Dokuments an einem Computer erzeugt wird. Ferner kann ein virtuelles Dokument beispielsweise auch durch Einscannen oder Ablichten eines physischen Dokumentenkörpers, wie etwa einem Dokument auf Papier, erstellt werden.

Nach Ausführungsformen umfassen die zu speichernden Daten Daten einer Transaktion, wobei das Bereitstellen der zu speichernden Daten ein Empfangen der Daten mittels einer Kommunikationsschnittstelle über ein Netzwerk von einem an der Ausführung der Transaktion beteiligten Computersystem umfasst, wobei das Verfahren ferner umfasst:

- Empfangen einer Anfrage nach einer aktuellen Version der Blockchain-Struktur mittels der Kommunikationsschnittstelle über das Netzwerk von einem anfragenden Computersystem,
- Versenden der erweiterten Blockchain-Struktur mittels der Kommunikationsschnittstelle über das Netzwerk an das anfragende Computersystem in Antwort auf die empfangene Anfrage.

Ausführungsformen können den Vorteil haben, dass anhand der in der Blockchain-Struktur eingetragenen Daten Transaktionen protokolliert werden können. Bei den Transaktionen kann es sich beispielsweise um Transaktionen einer Kryptowährung einer klassischen Währung, einen Verkauf, einen Versand, eine Eigentumsübertragung oder eine Übergabe eines Gegenstands und/oder eines digital codierten Dokuments handeln.

Nach Ausführungsformen umfassen die zu speichernden Daten Zustandsdaten einer Vorrichtung, wobei das Bereitstellen der zu speichernden Daten ein Empfangen der Daten mittels einer Kommunikationsschnittstelle über ein Netzwerk von einem die Zustandsdaten mittels eines Sensors erfassenden Computersystem umfasst, wobei das Verfahren ferner umfasst:

- Empfangen einer Anfrage nach einer aktuellen Version der Blockchain-Struktur mittels der Kommunikationsschnittstelle über das Netzwerk von einem anfragenden Computersystem,
- Versenden der erweiterten Blockchain-Struktur mittels der Kommunikationsschnittstelle über das Netzwerk an das anfragende Computersystem in Antwort auf die empfangene Anfrage.

Ausführungsformen können den Vorteil haben, dass anhand der in der Blockchain-Struktur eingetragenen Zustandsdaten der Zustand und/oder die Zustandshistorie einer Vorrichtung protokolliert werden kann. Bei einer solchen Vorrichtung kann es sich beispielsweise um eine Produktionsvorrichtung, eine Komponente eines Computersystems, eine Schließanlage, eine Zugangskontrollvorrichtung oder ein Fahrzeug handeln. Unter einem "Fahrzeug" wird hier ein mobiles Verkehrsmittel verstanden. Ein solches Verkehrsmittel kann beispielsweise dem Transport von Gütern (Güterverkehr), von Werkzeugen (Maschinen oder Hilfsmittel) oder Personen (Personenverkehr) dienen. Fahrzeuge umfassen insbesondere auch motorisierte Verkehrsmittel. Bei einem Fahrzeug kann es sich beispielsweise um ein Landfahrzeug, ein Wasserfahrzeug und/oder ein Luftfahrzeug handeln. Ein Landfahrzeug kann beispielsweise sein: ein Automobil, wie etwa ein Personenkraftwagen, Omnibus oder ein Lastkraftwagen, ein motorbetriebenes Zweirad, wie etwa ein Motorrad, Kleinkraftrad, Motorroller oder Motorfahrrad, ein landwirtschaftlicher Traktor, Gabelstapler, Golfmobil, Autokran. Darüber hinaus kann es sich bei einem Landfahrzeug auch um ein Schienen gebundenes Fahrzeug handeln. Wasserfahrzeug kann beispielsweise sein: ein Schiff oder Boot. Ferner kann ein Luftfahrzeug beispielsweise sein: ein Flugzeug oder Hubschrauber. Unter einem Fahrzeug wird insbesondere auch ein Kraftfahrzeug verstanden.

Unter einem "Sensor" wird hier ein Element zum Erfassen von Messdaten verstanden. Messdaten sind Daten, welche physikalische oder chemische Eigenschaften eines Messobjekts, wie beispielsweise Wärmemenge, Temperatur, Feuchtigkeit, Druck, Schallfeldgrößen, elektromagnetische Feldstärke, Helligkeit, Beschleunigung, Lageänderung, pH-Wert, Ionenstärke, elektrochemisches Potential, und/oder dessen stoffliche Beschaffenheit qualitativ oder quantitativ wiedergeben. Messdaten werden mittels physikalischer oder chemischer Effekte erfasst und in ein elektronisch weiterverarbeitbares elektrisches Signal umgeformt. Ferner können Messdaten, Zustände und/oder Zustandsänderung von elektronischen Geräten bzw. in Folge einer Benutzung durch einen Nutzer wiedergeben.

Die Zustandsdaten können nach Ausführungsformen auch Daten über von der Vorrichtung ausgeführte Funktionen umfassen. Beispielsweise können so von einer Produktionsvorrichtung ausgeführte Fertigungs- und/oder Bearbeitungsvorgänge protokolliert werden. Ferner können beispielsweise Aktionen einer Zugangskontrollvorrichtung protokolliert werde, wobei die protokollierten Daten Informationen darüber umfassen können, wann wer über die Zugangskontrollvorrichtung Zugang zu einem gesicherten Bereich erhalten hat.

Nach Ausführungsformen umfassen die zu speichernden Daten Daten, welche einen Bearbeitungsvorgang eines digital codierten Dokuments kennzeichnen, wobei das Bereitstellen der Blockchain-Struktur ein Empfangen des zu bearbeitenden Dokuments, welche die Blockchain-Struktur umfasst, und ein Auslesen der Blockchain-Struktur aus dem empfangenen Dokument umfasst, wobei das Bereitstellen der zu speichernden Daten ein Bearbeiten des empfangenen Dokuments und ein Erzeugen der Daten umfasst, wobei das Speichern der erweiterten Blockchain-Struktur ein Hinzufügen der erweiterten Blockchain-Struktur zu dem bearbeiteten Dokument und ein Speichern des bearbeiteten Dokuments mit der erweiterten Blockchain-Struktur umfasst.

Ausführungsformen können den Vorteil haben, dass anhand der in der Blockchain-Struktur eingetragenen Daten Bearbeitungsvorgang eines digital codierten Dokuments protokolliert werden können. Beispielsweise kann protokolliert werden, wann wer auf das Dokument zugegriffen hat und ob bzw. welche Änderungen an dem Dokument vorgenommen wurden. Ferner können beispielsweise Kopiervorgänge des Dokuments protokolliert und die erweiterte Blockchain-Struktur zu der erstellten Kopie hinzugefügt werde. Die Blockchain-Struktur umfasst in diesem Fall eine Abstammungshistorie der erstellten Kopie.

Nach Ausführungsformen umfasst das Verfahren ferner:

- Empfangen einer Anfrage nach dem bearbeiteten Dokument mittels einer Kommunikationsschnittstelle über ein Netzwerk von einem anfragenden Computersystem,
- Versenden des bearbeiteten Dokuments mit der erweiterten Blockchain-Struktur mittels der Kommunikationsschnittstelle über das Netzwerk an das anfragende Computersystem in Antwort auf die empfangene Anfrage.

Ausführungsformen können den Vorteil haben, dass anhand der Blockchain-Struktur die Bearbeitungshistorie und/oder Abstammungshistorie des bearbeiteten Dokuments nachvollzogen und/oder nachgeprüft werden kann.

Bei dem Dokument kann es sich insbesondere um eine Nachrichtenmeldung handeln, etwa in Form einer Webseite, einer mit einer Webseite verlinkten oder in eine Webseite integrierten Datei oder eines Postings. Unter einer Webseite bzw. Webdokument, Internetseite oder Webpage wird ein über das Internet bereitgestelltes Dokument verstanden, das beispielsweis von einem Webserver angeboten und mit einem Browser eines Nutzer-Computersystems unter Angabe eines Uniform Resource Locators (URL) abgerufen werden kann. Beispielsweise handelt es sich um ein HTML-Dokument. Unter einem Posting wird hier ein einzelner Beitrag auf einer Internet-Plattform, wie etwa einer Social-Media-Plattform, in einem Webforum oder einem Blog verstanden.

Ausführungsformen umfassen ein elektronisches Datenspeichersystem zum manipulationssicheren Speichern von Daten in einer bidirektional verketteten Blockchain-Struktur, wobei das Datenspeichersystem einen Prozessor und einen elektronischen Speicher mit maschinenlesbaren Instruktionen umfasst, wobei ein Ausführen der maschinenlesbaren Instruktionen durch den Prozessor das Datenspeichersystem dazu veranlasst, ein Verfahren auszuführen, welches umfasst:

- Bereitstellen der bidirektional verketteten Blockchain-Struktur,
- Bereitstellen der zu speichernden Daten,
- Bereitstellen einer ersten Funktionenschar, welche eine Mehrzahl von Funktionen umfasst, wobei sich die Funktionen in mindestens einem ersten Parameter unterscheiden und unter Verwendung des jeweiligen ersten Parameters eindeutig identifizierbar sind,
- Erzeugen eines zusätzlichen Blocks zum Erweitern der Blockchain-Struktur, welcher die zu speichernden Daten umfasst und dazu vorgesehen ist mit dem letzten Block der Blockchain-Struktur bidirektional verkettet zu werden, wobei der letzte Block der Blockchain-Struktur gespeicherte Daten umfasst,
- Erstellen einer ersten blockabhängigen bidirektionalen Verkettungsfunktion zum bidirektionalen Verketten des letzten Blocks mit dem zusätzlichen Block, wobei das Erstellen der ersten Verkettungsfunktion umfasst:

     o Berechnen zumindest eines ersten Prüfwerts für den letzten und den zusätzlichen Block unter Verwendung der in dem letzten Block gespeicherten Daten und der in dem zusätzlichen Block zu speichernden Daten,
     o Auswählen einer ersten Funktion der ersten Funktionenschar in Abhängigkeit von dem ersten Prüfwert gemäß einer ersten eindeutigen Zuordnungsbedingung zwischen dem ersten Parameter der ausgewählten ersten Funktion und dem ersten Prüfwert,
     o Verwenden der ausgewählten ersten Funktion zum Erstellen der ersten blockabhängigen bidirektionalen Verkettungsfunktion,

- Bidirektionales Verketten des letzten Blocks mit dem zusätzlichen Block, wobei das bidirektionale Verketten umfasst:

     o Hinzufügen der ersten blockabhängigen bidirektionalen Verkettungsfunktion zu dem letzten Block,

o Hinzufügen der ersten blockabhängigen bidirektionalen Verkettungsfunktion zu dem zusätzlichen Block,

- Speichern der um den zusätzlichen Block erweiterten Blockchain-Struktur.

Nach Ausführungsformen ist das elektronisches Datenspeichersystem dazu konfiguriert eine oder mehrere der zuvor genannten Ausführungsformen des Verfahrens zum manipulationssicheren Speichern von Daten auszuführen.

Nach Ausführungsformen umfasst das elektronisches Datenspeichersystem ein Dateisystem. Das Dateisystem stellt eine Ablageorganisation auf dem Datenspeicher bereit. Daten wie etwa digital codierte Dokumente können als Dateien auf dem Datenspeicher gespeichert werden. Ferner können die Dateien gelesen, verändert oder gelöscht werden.

Nach Ausführungsformen umfasst das elektronische Datenspeichersystem eine Datenbank. Eine Datenbank bzw. ein Datenbanksystem bezeichnet ein System zur elektronischen Datenverwaltung. Ein Datenbanksystem erlaubt es, große Datenmengen effizient, widerspruchsfrei und dauerhaft zu speichern und benötigte Teilmengen in unterschiedlichen, bedarfsgerechten Darstellungsformen für Benutzer und Anwendungsprogramme bereitzustellen. Das Datenbanksystem umfasst beispielsweise ein Datenbankmanagementsystem und eine Datenbank im engeren Sinn bzw. Datenbasis. Das Datenbankmanagementsystem stellt eine Verwaltungssoftware zum Verwalten von Daten der Datenbasis bereit. Die Verwaltungssoftware organisiert intern die strukturierte Speicherung der Daten und kontrolliert alle lesenden und schreibenden Zugriffe auf die Datenbank. Die Datenbasis umfasst die Menge der zu verwaltenden Daten. Daten wie etwa digital codierte Dokumente werden in diesem Fall beispielsweise als Teil der Datenbasis gespeichert.

Der Speicher kann beispielsweise einen Wechselspeicher umfassen handeln, d.h. einen nicht fest eingebauter, austauschbarer und/oder tragbarer Datenträger für ein Computersystem handeln. Wechselspeicher umfassen beispielsweise Blu-ray Discs, CDs, Disketten, DVDs, HD-DVDs, Magnetbänder, MO/MODs, Solid-State-Drives (SSD), Speicherkarten, USB-Sticks oder Wechselfestplatten.

Ausführungsformen umfassen ein Telekommunikationssystem, welches ein elektronisches Datenspeichersystem nach einer der zuvor beschriebenen Ausführungsformen und eine Kommunikationsschnittstelle zum Kommunizieren über ein Netzwerk umfasst, wobei das Bereitstellen der zu speichernden Daten ein Empfangen der Daten mittels einer Kommunikationsschnittstelle über ein Netzwerk umfasst, wobei das ausgeführte Verfahren ferner umfasst:

- Empfangen einer Anfrage nach einer aktuellen Version der Blockchain-Struktur mittels der Kommunikationsschnittstelle über das Netzwerk von einem anfragenden Telekommunikationssystem,
- Versenden der erweiterten Blockchain-Struktur mittels der Kommunikationsschnittstelle über das Netzwerk an das anfragende Telekommunikationssystem in Antwort auf die empfangene Anfrage.

Bei dem Telekommunikationssystem handelt es sich beispielsweise um ein Computersystem, welches zur Kommunikation über ein Netzwerk konfiguriert ist.

Ein Netzwerk kann beispielsweise ein lokales Netzwerk, insbesondere ein Local Area Network (LAN), ein privates Netzwerk, insbesondere ein Intranet, oder ein virtuelles privates Netzwerk (Virtual Private Network - VPN) umfassen. Beispielsweise kann das Computersystem eine Standardfunkschnittstelle zur Anbindung an ein WLAN aufweisen. Ferner kann es sich um ein öffentliches Netzwerk, wie beispielsweise das Internet handeln. Ferner kann es sich bei dem beispielsweise um ein digitales zellulares Mobilfunknetzwerk handeln.

Unter einem "Computersystem" wird hier ein Gerät verstanden, welches mittels programmierbarer Rechenvorschriften unter Verwendung elektronischer Schaltkreise Daten verarbeitet. Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Ein Computersystem kann eine Schnittstelle zur Verbindung mit dem Netzwerk umfassen, wobei es sich bei dem Netzwerk um ein privates oder öffentliches Netzwerk handeln kann, insbesondere das Internet oder ein anderes Kommunikationsnetz. Je nach Ausführungsform kann diese Verbindung auch über ein Mobilfunknetz hergestellt werden.

Bei einem Computersystem kann es sich beispielsweise um ein mobiles Telekommunikationsgerät, insbesondere ein Smartphone, einen tragbaren Computer, wie zum Beispiel einen Laptop oder Palmtop-Computer, einen Personal Digital Assistant oder dergleichen handeln. Ferner kann es sich um beispielsweise um eine Smartwatch oder Smartglasses handeln. Zudem kann es sich um ein stationäres Computersystem, wie beispielsweise einen Personal Computer oder einen in einer Client-Server-Umgebung eingebundenen Server handeln. Insbesondere kann es sich um einen Server mit einem Datenbankmanagementsystem, welcher eine Datenbank mit einer Daten verwaltet.

Unter einem "Speicher" bzw. "Datenspeicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist. Unter einer Kommunikationsschnittstelle zur drahtlosen Kommunikation wird eine Kommunikationsschnittstelle verstanden, welche zum kontaktlosen Senden und Empfangen von Daten konfiguriert ist. Die Kommunikation kann beispielsweise nach einem RFID-und/oder NFC-Standard, wie etwa Bluetooth, erfolgen. Ferner kann die Kommunikationsschnittstelle zur Kommunikation über ein lokales Funknetz konfiguriert sein, beispielsweise nach einem Standard der IEEE-802.11-Familie und/oder Wi-Fi.

Eine Schnittstelle kann beispielsweise als Funkschnittstelle konfiguriert sein, welche eine Kommunikation über ein digitales zellulares Mobilfunknetzwerk ermöglicht, das nach einem Mobilfunkstandard wie zum Beispiel GSM, UMTS, LTE, CDMA oder einem anderen Standard aufgebaut sein kann

Eine Kommunikation kann im Allgemeinen beispielsweise über ein Netzwerk erfolgen. Unter einem "Netzwerk" wird hier jedes Übertragungsmedium mit einer Anbindung zur Kommunikation verstanden, welche eine Kommunikation zwischen zumindest zwei Computersystemen ermöglicht. Ein Netzwerk kann beispielsweise ein lokales Netzwerk, insbesondere ein Local Area Network (LAN), ein privates Netzwerk, insbesondere ein Intranet, oder ein virtuelles privates Netzwerk (Virtual Private Network-VPN) umfassen. Beispielsweise kann das Computersystem eine Standardfunkschnittstelle zur Anbindung an ein WLAN aufweisen. Ferner kann es sich um ein öffentliches Netzwerk, wie beispielsweise das Internet handeln.

Ausführungsformen umfassen ein Telekommunikationssystem, welches ein elektronisches Datenspeichersystem nach einer der zuvor beschriebenen Ausführungsformen und eine Kommunikationsschnittstelle zum Kommunizieren über ein Netzwerk umfasst, wobei die zu speichernden Daten Daten umfasst, welche einen Bearbeitungsvorgang eines digital codierten Dokuments kennzeichnen, wobei das Bereitstellen der Blockchain-Struktur ein Empfangen des zu bearbeitenden Dokuments, welche die Blockchain-Struktur umfasst, und ein Auslesen der Blockchain-Struktur aus dem empfangenen Dokument umfasst, wobei das Bereitstellen der zu speichernden Daten ein Bearbeiten des empfangenen Dokuments und ein Erzeugen der Daten umfasst, wobei das Speichern der erweiterten Blockchain-Struktur ein Hinzufügen der erweiterten Blockchain-Struktur zu dem bearbeiteten Dokument und ein Speichern des bearbeiteten Dokuments mit der erweiterten Blockchain-Struktur umfasst, wobei das ausgeführte Verfahren ferner umfasst:

- Empfangen einer Anfrage nach dem bearbeiteten Dokument mittels der Kommunikationsschnittstelle über das Netzwerk von einem anfragenden Telekommunikationssystem,
- Versenden des bearbeiteten Dokuments mit der erweiterten Blockchain-Struktur mittels der Kommunikationsschnittstelle über das Netzwerk an das anfragende Telekommunikationssystem in Antwort auf die empfangene Anfrage.

Nach Ausführungsformen erfolgt das Versenden des digital codierten Dokuments auf einen Empfang einer Anforderung zum Versenden. Beispielsweise handelt es sich bei dem digital codierten Dokument um ein HTML-Dokument. Beispielsweise wird das digital codierten Dokument auf einer Internet-Plattform bereitgestellt, etwa als Webseite oder als Posting. Unter einem Posting wird hier ein einzelner Beitrag auf einer Internet-Plattform, wie etwa einer Social-Media-Plattform, in einem Webforum oder einem Blog verstanden. Ferner kann das digital codierten Dokument zum Download bereitgestellt sein. Beispielsweise umfasst eine Webseite oder ein Posting einen Link zum Aufrufen des digital codierten Dokuments.

Auf eine entsprechende Anforderung hin, etwa in Form einer HTTP-GET-Anforderung, wird das digital codierten Dokument an das anfordernde Computersystem versendet.

Nach alternativen Ausführungsformen erfolgt das Versenden des digital codierten Dokuments unabhängig von einer Anforderung zum Versenden. Beispielsweise wird das Dokument in Form einer E-Mail, einer Instant-Massage, einer Tonnachricht, einer Videonachricht, einer Bildnachricht, einer SMS oder einer MMS versendet bzw. von einem der zuvor genannten Nachrichtentypen umfasst. Instant Messaging bezeichnet eine Kommunikationsmethode, bei der zwei oder mehr Teilnehmer per digital codierter Text-, Sprach-, Bild- und/oder Videonachrichten miteinander kommunizieren. Dabei löst der Absender die Übermittlung der Nachricht aus, d.h. ein sog. Push-Verfahren findet Anwendung, so dass die Nachrichten möglichst unmittelbar bei dem vorgesehenen Empfänger ankommen. Die Teilnehmer sind dabei mit einem Computerprogramm über ein Netzwerk, wie etwa das Internet, direkt oder über einen Server miteinander verbunden sein.

Im Weiteren werden Ausführungsformen der Erfindung mit Bezugnahme auf die Zeichnungen näher erläutert. Es zeigen:

Figur 1    ein schematisches Blockdiagramm einer Ausführungsformen einer exemplarischen Blockchain-Struktur,

Figur 2    ein schematisches Flussdiagramm eines exemplarischen Verfahrens zum Erstellen einer bidirektionalen Blockchain-Struktur,

Figur 3    ein schematisches Flussdiagramm eines exemplarischen Verfahrens zum Erstellen einer bidirektionalen Blockchain-Struktur,

Figur 4    ein schematisches Blockdiagramm eines exemplarischen Verfahrens zum Erstellen eines kombinierten blockabhängigen Prüfwerts,

Figur 5    ein schematisches Flussdiagramm eines exemplarischen Verfahrens zum Erstellen eines kombinierten blockabhängigen Prüfwerts,

Figur 6    ein schematisches Flussdiagramm eines exemplarischen Verfahrens zum Erstellen einer verkürzten bidirektionalen Blockchain-Struktur,

Figur 7    ein schematisches Blockdiagramm einer Ausführungsform eines exemplarischen Datenspeichersystems,

Figur 8    ein schematisches Blockdiagramm einer Ausführungsform eines exemplarischen Telekommunikationssystems.

Elemente der nachfolgenden Ausführungsformen, die einander entsprechen, werden mit denselben Bezugszeichen gekennzeichnet.

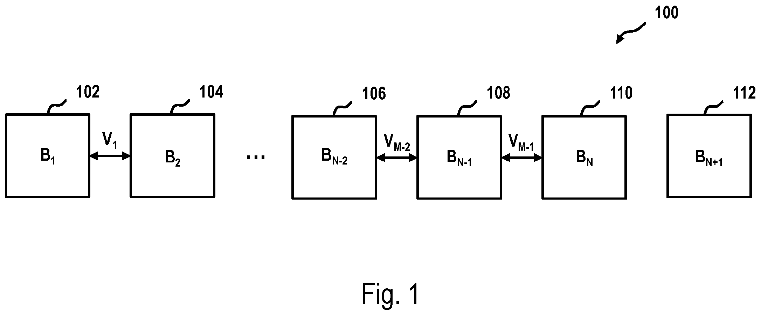

Figur 1 zeigt eine Ausführungsform einer exemplarischen Blockchain-Struktur 100, welche N-Blöcke 102, 104, 106, 108, 110 umfasst. Die Blockchain-Struktur 100 soll um einen zusätzlichen Block 112 erweitert werden. Die Blöcke 102, 104, 106, 108, 110 der Blockchain-Struktur 100 sind durch blockabhängige bidirektionale Verkettungsfunktionen miteinander verkettet. Die einzelnen bidirektionalen Verbindungen bzw. Verkettungen $V_1$, $V_{M-2}$, $V_{M-1}$ sind schematisch angedeutet durch Doppelpfeile. Die inneren Blöcke 104, 106, 108 der Blockchain-Struktur 100 umfassen jeweils eine gemeinsame blockabhängige Verkettungsfunktion. In diese gemeinsame blockabhängige Verkettungsfunktion können entweder ein Prüfwert jeder der beiden bidirektional miteinander verketteten als Parameter eingehen. Ferner kann aus den Prüfwerten ein kombinierter Prüfwert berechnet werden und zur Auswahl der blockabhängigen Verkettungsfunktion herangezogen werden. Schließlich kann für jeden der Prüfwerte jeweils eine Funktion ausgewählt werden, welche zur gemeinsame blockabhängige Verkettungsfunktion kombiniert werden. Die entsprechende gemeinsame blockabhängige Verkettungsfunktion wird zu beiden bidirektional miteinander zu verkettenden Blöcken hinzugefügt.

Der Prüfwert der Verkettungsfunktion zum Verketten des letzten Blocks 110 der Blockchain-Struktur 100 in dem zusätzlichen Block 112, d.h. zum Erzeugen der bidirektionalen Verbindung $V_M$, ist sowohl abhängig von Daten, welche in dem letzten Block 110 gespeichert sind, als auch von Daten, welche in dem zusätzlichen Block 112 zu speichern sind. Somit stellt die im Zuge der bidirektionalen Verkettung in dem letzten Block 110 und dem zusätzlichen Block 112 gespeicherte gemeinsame Verkettungsfunktion nur solange eine korrekte Prüffunktion basierend auf korrekten Prüfwerten der beiden entsprechenden Blöcke dar, solange die Daten beider Blöcke unverändert bleiben. Im Falle einer Manipulation, beispielsweise des zusätzlichen Blocks 112, passt die entsprechende Verkettungsfunktion der Verbindung zwischen dem letzten Block 110 und dem zusätzlichen Block 112 nicht mehr zu den Daten des zusätzlichen Blocks 112. Anhand dieser Abweichung lässt sich eine entsprechende Manipulation erkennen.

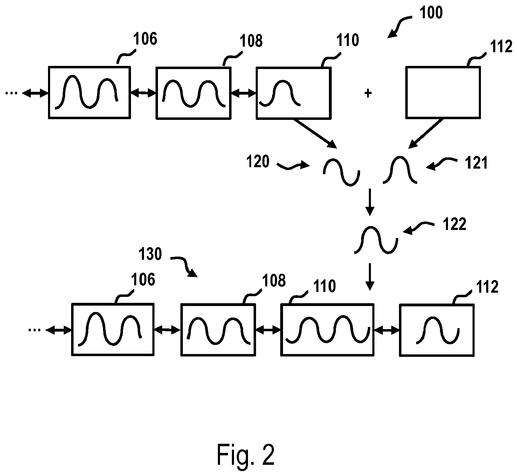

Figur 2 zeigt ein schematisches Blockdiagramm des Verfahrens zum Erweitern der Blockchain 100 aus Figur 1 um den Block 112. Die Blöcke 106, 108, 110 der Blockchain-Struktur 100 umfassen jeweils eine blockabhängige Verkettungsfunktion, welche schematisch durch Funktionskurven angedeutet sind. Die Blöcke in der Blockchain-Struktur 100, wie etwa der vorletzte Block 108 und der vorvorletzte Block 106, weisen jeweils eine Kombination aus zwei blockabhängige bidirektionalen Verkettungsfunktionen auf, welche eine Verknüpfung der blockabhängigen bidirektionalen Verkettungsfunktionen der bidirektionalen Verbindungen zu dem vorhergehenden Block, beispielsweise Block 106 im Fall des Blocks 108, sowie zu dem nachfolgenden Block, beispielsweise Block 110 im Fall des Blocks 108, darstellen. Die entsprechenden blockabhängigen Verkettungsfunktionen sind als mathematische Funktionen in die entsprechenden Blöcke 106, 108 integriert. Die jeweiligen blockabhängigen Verkettungsfunktionen wurden jeweils unter Verwendung der Daten beider miteinander zu verkettenden Blöcken aus einer erstellt.

Zur bidirektionalen Verkettung des letzten Blocks 110 der Blockchain-Struktur 100 mit dem zusätzlichen Block 112 werden beispielsweise zwei Funktionen 120, 121 aus zwei Funktionenscharen ausgewählt. Eine erste Funktion 120 wird beispielsweise aus einer ersten Funktionenschar in Abhängigkeit von einem Prüfwert der Daten des Blocks 110 gemäß einer eindeutigen Zuordnungsbedingung zwischen einem Parameter der ausgewählten ersten Funktion und dem Prüfwert des Blocks 110 ausgewählt. Die die zweite Funktion 121 wird beispielsweise aus einer zweiten Funktionenschar in Abhängigkeit von einem Prüfwert der Daten des zusätzlichen Blocks 112 gemäß einer eindeutigen Zuordnungsbedingung zwischen einem Parameter der ausgewählten zweiten Funktion und dem Prüfwert des Blocks 112 ausgewählt. Die beiden Funktionen 120, 121 werden zu einer gemeinsamen blockabhängigen Verkettungsfunktion 122 kombiniert. Bei einer entsprechenden Kombination kann es sich beispielsweise um eine arithmetische Verknüpfung, wie etwa eine Addition, Subtraktion, Multiplikation und/oder Division handeln. Die blockabhängige bidirektionale Verkettungsfunktion 122 wird zur bidirektionalen Verkettung des Blocks 110 mit dem Block 112 sowohl zu dem Block 110 als auch zu dem Block 112 hinzugefügt. Dabei wird die Verkettungsfunktion 122 mit der in dem Block 110 bereits vorhandenen Verkettungsfunktion der bidirektionalen Verkettung zwischen Block 108 und Block 110 verknüpft.

Nach alternativen Ausführungsformen werden die beiden Prüfwerte der beiden bidirektional zu verkettenden Blöcke 110, 112 zu einem kombinierten Prüfwert kombiniert und die blockabhängige bidirektionale Verkettungsfunktion 122 als Funktion aus einer Funktionenschar in Abhängigkeit von dem kombinierten Prüfwert der der beiden Blöcke 110, 112 gemäß einer eindeutigen Zuordnungsbedingung zwischen einem Parameter der ausgewählten Funktion, d.h. der blockabhängigen bidirektionalen Verkettungsfunktion 122, und dem kombinierten Prüfwert der Blöcke 110, 112 ausgewählt. Nach einer weiteren Alternative umfassen die Funktionen der Funktionenschar eine Mehrzahl von n Parametern, z.B. n=2, und sind unter Verwendung der jeweiligen n Parameter, welche ein n-Tupel von Parametern bilden, eindeutig identifizierbar. In diesem Fall wird aus den beiden Prüfwerten der 110, 112 ein n-Tupel von Prüfwerten gebildet und eine Funktion 122 der Funktionenschar in Abhängigkeit von dem n-Tupel von Prüfwerten gemäß einer eindeutigen Zuordnungsbedingung zwischen dem n-Tupel von Parametern der ausgewählten Funktion und dem n-Tupel von Prüfwerten ausgewählt.

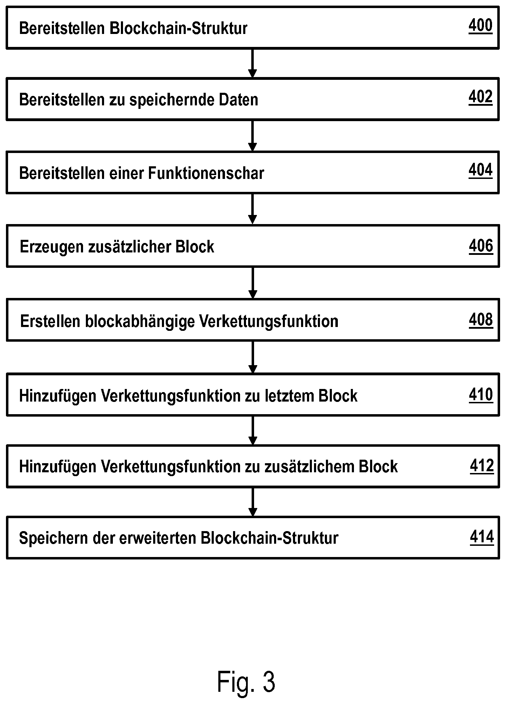

Figur 3 zeigt eine Ausführungsform eines exemplarischen Verfahrens zum Erweitern einer bidirektional verketteten Blockchain-Struktur um einen zusätzlichen Block. In Schritt 400 wird eine bidirektional verkettete Blockchain-Struktur bereitgestellt. In Schritt 402 werden die zu speichernden Daten bereitgestellt. In Block 404 wird eine Funktionenschar bereitgestellt. Die Funktionenschar umfasst eine Mehrzahl von Funktionen, wobei sich die Funktionen in mindestens einem ersten Parameter unterscheiden und unter Verwendung des jeweiligen ersten Parameters eindeutig identifizierbar sind. In Block 406 wird ein zusätzlicher Block zum Erweitern der Blockchain-Struktur erzeugt. Der zusätzliche Block umfasst die zu speichernden Daten und ist dazu vorgesehen, mit dem letzten Block der Blockchain-Struktur bidirektional verkettet zu werden. In Schritt 408 wird eine blockabhängige Verkettungsfunktion zum bidirektionalen Verketten des letzten Blocks der Blockchain-Struktur mit dem zusätzlichen Block unter Verwendung der Funktionenschar ausgewählt. Hierzu wird beispielsweise ein kombinierter blockabhängiger Prüfwert berechnet, welcher sowohl von den Daten des letzten Blocks der Blockchain-Struktur als auch von den Daten des hinzuzufügenden zusätzlichen Blocks abhängt. Beispielsweise wird für jeden der Blöcke ein individueller Prüfwert berechnet und die beiden resultierenden Prüfwerte werden miteinander kombiniert. Nach weiteren Ausführungsformen umfassen die Funktionen der in Block 404 bereitgestellten Funktionenschar n-Tupel von Parametern und aus den beiden Prüfwert der miteinander bidirektional zu verkettenden Blöcke wird ein n-Tupel von Prüfwerten erstellt. Die Funktion der Funktionenschar wird in Abhängigkeit von dem n-Tupel von Prüfwerten gemäß einer eindeutigen Zuordnungsbedingung zwischen dem n-Tupel von Parametern der ausgewählten ersten Funktion und dem n-Tupel von Prüfwerten ausgewählt. Nach einer weiteren Alternative werden in Block 404 zwei Funktionenscharen bereitgestellt. Aus der ersten der beiden Funktionenscharen wird dann in Block 408 eine erste Funktion unter Verwendung eines ersten Prüfwerts eines ersten der beiden miteinander bidirektional zu verkettenden Blöcke ausgewählt. Ferner wird aus der zweiten der beiden Funktionenscharen eine zweite Funktion unter Verwendung des zweiten Prüfwerts des zweiten der beiden miteinander bidirektional zu verkettenden Blöcke ausgewählt. Die beiden resultierenden Funktionen werden zu einer gemeinsamen blockabhängigen bidirektionalen Verkettungsfunktion kombiniert. In Schritt 410 wird die in Schritt 408 erstellte blockabhängige bidirektionale Verkettungsfunktion zu dem letzten Block der Blockchain-Struktur hinzugefügt. In Schritt 412 wird die blockabhängige bidirektionale Verkettungsfunktion Funktion zu dem zusätzlichen Block hinzugefügt. Nach Ausführungsformen umfasst der Schritt 410 ein Verknüpfen der in Schritt 408 erstellten blockabhängigen bidirektionalen Verkettungsfunktion mit der in dem letzten Block der Blockchain-Struktur bereits vorhandenen blockabhängigen bidirektionalen Verkettungsfunktion der bidirektionalen Verkettung zwischen dem letzten Block und dem vorletzten Block der Blockchain-Struktur. Bei der entsprechenden Verknüpfung kann es sich beispielsweise um eine arithmetische Verknüpfung handeln. Beispielsweise können die beiden Verkettungsfunktionen miteinander addiert oder multipliziert werden.

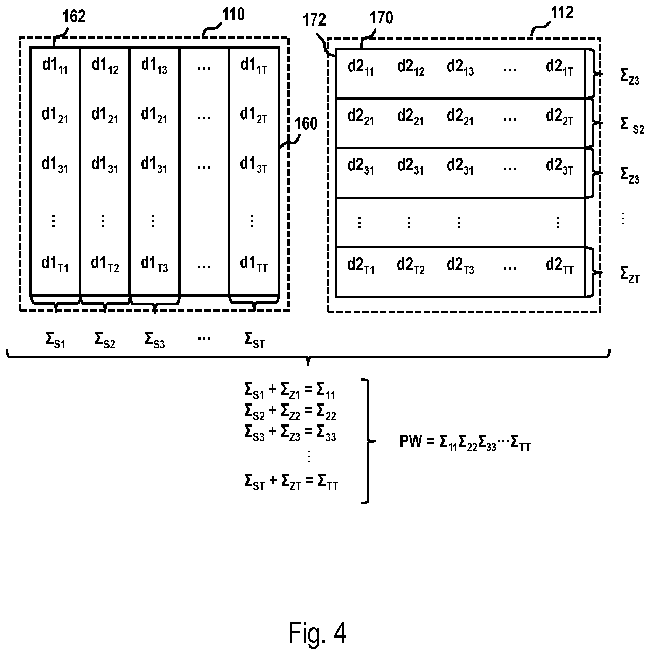

Figur 4 zeigt ein schematisches Blockdiagramm einer Berechnung des Prüfwerts zweier miteinander zu verkettender Blöcke 110, 112, wie sie etwa von Schritt 406 der Figur 3 umfasst wird. Die Daten der beiden miteinander zu verkettenden Blöcke 110, 112 sind beispielsweise jeweils in einer quadratischen (TxT)-Matrixstruktur 160, 170 gespeichert. Bei T handelt es sich beispielsweise um eine natürlich Zahl $T \geq 2$. Weisen die Matrixstrukturen 160, 170 der beiden Blöcke 110, 112 unterschiedliche Größen auf, so werden eine oder beide Matrixstrukturen 160, 170 derart erweitert, dass zwei gleich große quadratische Matrixstrukturen resultieren. Hierzu werden beispielsweise zusätzliche Matrixelemente bzw. zusätzliche Zeilen und/oder Spalten hinzugefügt. Die hinzugefügten Matrixelemente umfassen jeweils einen Platzhalter, beispielsweise den Wert 0. Weist beispielsweise die Matrixstruktur des Blocks 110 eine Spalte weniger auf, d.h. fehlt beispielsweise die T-te Spalte, so wird diese ergänzt, wobei alle Elemente der T-ten Spalte $D1_{1T}$ bis $D1_{TT}$ jeweils auf 0 gesetzt werden. Zum Berechnen des kombinierten blockabhängigen Prüfwerts PW wird beispielsweise für jede Spalte 162 der Matrixstruktur 160 des Blocks 110 die Summe aller Elemente der entsprechenden Spalte 162 berechnet. Für die i-te Spalte ergibt sich dabei die Summe

$$\Sigma_{Si} = \sum_{j=1}^{T} d1_{ji}$$

. Zudem wird für jede der Zeilen 172 der Matrixstruktur 170 des Blocks 112 jeweils die Summe aller Elemente der entsprechenden Zeile 172 berechnet. Für die i-te Zeile ergibt sich dabei die Summe

$$\Sigma_{Zi} = \sum_{j=1}^{T} d2_{ij}$$

. In einem nächsten Schritt wird jeweils die für die i-te Spalte der Matrixstruktur 160 des Blocks 110 berechnete Summe $\Sigma_{Si}$ zu der Summe $\Sigma_{Zi}$ der i-ten Zeile der Matrixstruktur 170 des Blocks 112 addiert. Die resultierenden T-Summen $\Sigma_{11}$ bis $\Sigma_{TT}$ werden als Zahlen aneinandergehängt, sodass eine Zahlenfolge resultiert, welche den kombinierten blockabhängigen Prüfwert bildet: $PW = \Sigma_{11}\Sigma_{22}\cdots\Sigma_{T-1T-1}\Sigma_{TT}$. Nach alternativen Ausführungsformen könnten zur Berechnung des kombinierten Prüfwerts auch die Summen über die Zeilen der Matrixstruktur 160 und die Summen über die Spalten der Matrixstruktur 170 gebildet werden.

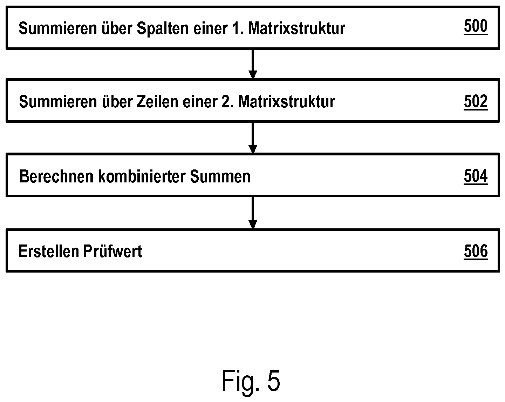

Figur 5 zeigt ein exemplarisches Verfahren zum Berechnen eines kombinierten blockabhängigen Prüfwerts gemäß Figur 4. In Schritt 500 wird für jede Spalte eine Matrixstruktur eines ersten Blocks eine Summe aus allen Elementen der entsprechenden Spalte berechnet. In Schritt 502 wird für jede Zeile einer Matrixstruktur eines zweiten Blocks, welche mit dem ersten Block bidirektional verkettet werden sollen, eine Summe aus allen Elementen der entsprechenden Zeile berechnet. In Schritt 504 wird jeder Spalte der Matrix des ersten Blocks eine Zeile der Matrix des zweiten Blocks zugeordnet. Beispielsweise wird die i-te Spalte der i-ten Zeile zugeordnet. Für jedes der resultierenden Paare aus der entsprechenden i-ten Spalte der Matrixstruktur des ersten Blocks und der i-ten Zeile der Matrixstruktur des zweiten Blocks wird eine kombinierte Summe berechnet. In Schritt 506 werden die in Schritt 504 berechneten Summen in einer Zahlenfolge aneinandergereiht, sodass sie einen kombinierten blockabhängigen Prüfwert bilden.

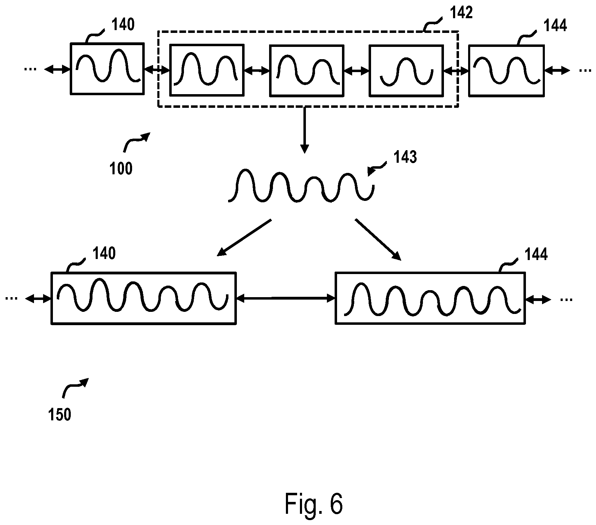

Figur 6 zeigt eine exemplarische bidirektional verkettete Blockchain-Struktur 100, welche verkürzt werden soll, sodass eine verkürzte Blockchain-Struktur 150 entsteht. Hierzu wird ein inneres Kettensegment 142 zwischen den Blöcken 140 und 144 entnommen. Das entnommene innere Kettensegment 142 kann beispielsweise sicherheitskritische Daten umfassen. Beispielsweise umfasst das innere Kettensegment 142 eine Mehrzahl von aufeinanderfolgenden Blöcken der Blockchain-Struktur 100. Nach der Entnahme des Kettensegments 142 bilden die zwei verbleibenden Blöcke 140 und 144 direkte Nachbarblöcke der verkürzten Blockchain-Struktur 150. Diese beiden Blöcke 140, 144 werden mit einer kombinierten bidirektionalen Verkettungsfunktion 143 verkettet, welche eine Kombination aller blockabhängigen bidirektionalen Verkettungsfunktionen der Blöcke des entnommen inneren Kettensegments 142 umfasst. Beispielsweise werden die einzelnen bidirektionalen Verkettungsfunktionen des inneren Kettensegments 142 durch eine arithmetische Verknüpfung miteinander verknüpft, welche beispielsweise eine Addition, Subtraktion, Multiplikation und/oder Division umfasst. Dadurch werden die beiden Blöcke 140 und 144, welche nach der Entnahme des inneren Kettensegments 142 zunächst lose Enden der Blockchain-Struktur 150 bilden, bidirektional miteinander verkettet. Beispielsweise werden die Verkettungsfunktionen der Blöcke 140, 144 derart erweitert, dass sie die kombinierte bidirektionale Verkettungsfunktion 143 vollständig umfassen.

Die entstehende Blockchain-Struktur 150 ist dabei insbesondere nach wie vor abhängig von dem entnommenen inneren Kettensegment 142. Wird das entnommene innere Kettensegment 142 zur Ergänzung der verkürzten Blockchain-Struktur 150 bereitgestellt, so kann durch Verwendung der erweiterten bidirektionalen Verkettungsfunktionen der Blöcke 140, 144, welche kombinierten bidirektionalen Verkettungsfunktion 143 umfassen, geprüft werden, ob das bereitgestellte innere Kettensegment authentisch ist. Ist das bereitgestellte innere Kettensegment authentisch, d.h. identisch mit dem entnommenen Kettensegment 142, so kann die verkürzte Blockchain-Struktur zu der ursprünglichen vollständigen Blockchain-Struktur 100 ergänzt werden. Auf diese Weise können beispielsweise Blöcke mit sicherheitskritischen Daten ergänzt werden, welche zuvor zum Schutz der sicherheitskritischen Daten entnommen wurden.

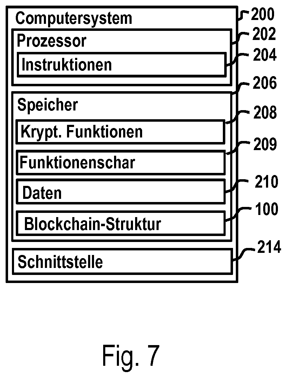

Figur 7 zeigt ein schematisches Blockdiagramm einer Ausführungsform eines exemplarischen Datenspeichersystems 200 in Form eines Computersystems zum manipulationssicheren Speichern von Daten 210 in einem elektronischen Speicher 206 unter Verwendung einer bidirektional verketteten Blockchain-Struktur 100. Das Computersystem 200 umfasst einen Prozessor 202, welcher dazu konfiguriert ist, Programminstruktionen 204 auszuführen. Durch Ausführung der Programminstruktionen 204 steuert der Prozessor 202 das Computersystem 200 so, dass es eine der zuvor beschriebenen Ausführungsformen des Verfahrens zum manipulationssicheren Speichern von Daten ausführt.

Das Computersystem 200 umfasst ferner einen Speicher 206, in welchem kryptographische Funktionen 208 zum Berechnen von blockabhängigen Prüfwerten sowie ein oder mehrere Funktionenscharen 209 zum Auswählen von ein oder mehr Funktionen für das Erstellen blockabhängiger bidirektionaler Verkettungsfunktionen. Der Speicher 206 umfasst zudem Daten 210, welche unter Verwendung einer bidirektional verketteten Blockchain-Struktur 100 gegen Manipulationen geschützt bzw. manipulationssicher gespeichert werden sollen. Beispielsweise führt das Computersystem 200 eines der Verfahren gemäß Figuren 2 und 3 aus und erzeugt einen zusätzlichen Block für die Blockchain-Struktur 100, welcher die zu manipulationssicher speichernden Daten 210 umfasst und bidirektional mit dem letzten Block der Blockchain-Struktur 100 verknüpft wird. Für die bidirektionale Verkettung des zusätzlichen Blocks werden beispielsweise Prüfwerte unter Verwendung der Funktionen 208 berechnet, welche sowohl von den Daten 210 als auch von Daten aus der Blockchain-Struktur 100 abhängen. Unter Verwendung dieser Prüfwerte und der Funktionenschar 209 wird eine blockabhängige bidirektionale Verkettungsfunktion erstellt.

Schließlich umfasst das Computersystem 200 eine Kommunikationsschnittstelle 214. Bei dieser Kommunikationsschnittstelle 214 kann es sich beispielsweise um eine Netzwerkschnittstelle zur Kommunikation über ein Netzwerk oder um eine Schnittelle zur Kommunikation mit einem Wechseldatenträger handeln. Über die Kommunikationsschnittstelle 214 können beispielsweise die Daten 210 und/oder die Blockchain-Struktur 100 bereitgestellt werden. Ferner kann es sich bei der Kommunikationsschnittstelle 214 um eine Nutzerschnittstelle zur Eingabe von Befehlen durch einen Nutzer und/oder zur Ausgabe von Ergebnissen handeln.

Nach Ausführungsformen können die Programminstruktionen 204 beispielsweise ein Datenbankmanagementsystem umfassen, welches in dem Speicher 206 gespeicherte Blockchain-Strukturen, wie etwa Blockchain-Struktur 100, verwaltet.

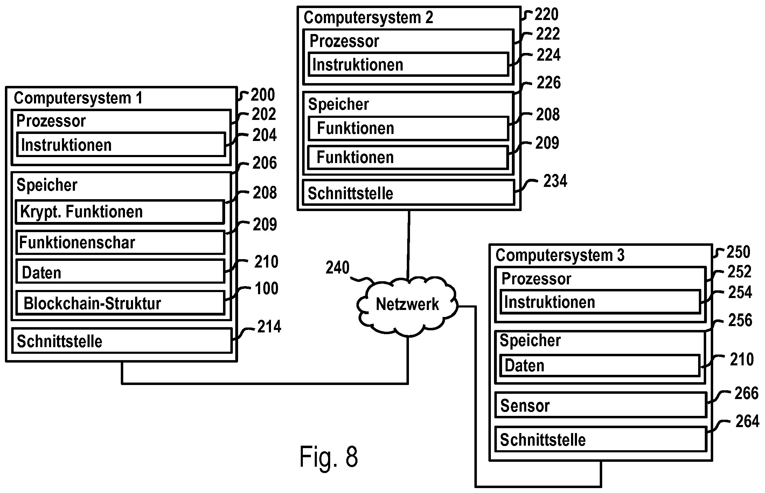

Figur 8 das exemplarische Datenspeichersystems 200 aus Figur 7, welches als ein Telekommunikationssystem konfiguriert ist, das mittels der Kommunikationsschnittstelle 214 über das Netzwerk 240 mit anderen Computersystemen, wie etwa den Computersystemen 220, 250, kommunizieren kann. Beispielsweise werden die Daten 210 von dem Computersystem 250 über das Netzwerk 240 bereitgestellt.

Das Computersystem 250 umfasst beispielsweise einen Speicher 256 zum Speichern der Daten 210, welche durch das Computersystem 200 gegen Manipulationen gesichert werden sollen. Nach Ausführungsformen handelt es sich bei den Daten 210 um Daten, welche kennzeichnend für ein digital codiertes Dokument sind. Beispielsweise handelt es sich bei den Daten 210 um einen Hashwert des Inhalts eines digital codierten Dokuments. Nach weiteren Ausführungsformen handelt es sich bei den Daten 210 um Transaktionsdaten einer von dem Computersystem 250 veranlassten, protokollierten und/oder ausgeführten Transaktion. Nach weiteren Ausführungsformen handelt es bei den Daten 210 um Sensordaten, welche mittels eines Sensors 266 des Computersystems 250 erfasst wurden. Ferner umfasst das Computersystem 250 einen Prozessor 252, welcher dazu konfiguriert ist, Programminstruktionen 254 auszuführen. Nach Ausführungsformen ist das Computersystems 250 ebenfalls als ein Telekommunikationssystem konfiguriert sein, welches mittels der Kommunikationsschnittstelle 264 über das Netzwerk 240 mit dem Computersystemen 200 kommunizieren kann. Ein Ausführen der Programminstruktionen 254 durch den Prozessor 252 veranlasst das Computersystems 250 beispielsweise die Daten 210 an das Computersystem 200 zu senden. Das Übersenden der Daten 210 über das Netzwerk 240 kann dabei beispielsweise in Antwort auf eine Anfrage durch das Computersystem 200 oder auf eigene Initiative durch das Computersystem 250 veranlasst erfolgen.

Die Figur 8 zeigt zudem das Computersystem 220, welche beispielsweise ebenfalls als ein Telekommunikationssystem konfiguriert ist und mittels der Kommunikationsschnittstelle 264 über das Netzwerk 240 mit dem Computersystemen 200 kommunizieren kann. Das Computersystem 220 umfasst beispielsweise einen Prozessor 222 mit Programminstruktionen 224. Der Prozessor 222 ist dazu konfiguriert die Programminstruktionen 224 auszuführen, wobei ein Ausführen der Programminstruktionen 224 durch den Prozessor 222 das Computersystems 220 dazu veranlasst die um die Daten 210 erweiterte Blockchain-Struktur 100 über das Netzwerk von dem Computersystem 200 anzufragen. In Antwort auf eine entsprechende Anfrage empfängt das Computersystems 220 beispielsweise die Blockchain-Struktur 100. Nach Ausführungsformen kann das Computersystems 220 die Blockchain-Struktur 100 in der Blockchain-Struktur 100 gespeicherte Daten auslesen. Die Integrität der ausgelesenen Daten kann das Computersystems 220 beispielsweise unter Verwendung der in dem Speicher 226 gespeicherten kryptographischen Funktionen 208 und der bzw. den Funktionenscharen 209 prüfen. Mit den kryptographischen Funktionen 208 und der Funktionenschar 209 können die blockabhängigen bidirektionalen Verkettungsfunktionen der Blockchain-Struktur 100, welche die Blöcke der Blockchain-Struktur 100 bidirektional miteinander verketten, nachgerechnet und auf Konsistenz bzw. Integrität geprüft werden. Bei den ausgelesenen Daten handelt es sich beispielsweise um Daten zum Belegen der Authentizität eines digital codierten Dokuments. Das entsprechende Dokument wird dem Computersystem 220 beispielsweise von dem Computersystem 250 über das Netzwerk 240 zur Verfügung gestellt. Handelt es sich bei den ausgelesenen Daten beispielsweise um einen Hashwert des Inhalts des Dokuments, so kann anhand dieser Daten die Authentizität des bereitgestellten Dokuments geprüft werden. Beispielswiese wird für das Dokument ein Hashwert durch das Computersystem 220 berechnet. Stimmt der berechnete Hashwert mit den ausgelesenen Daten überein, wird das bereitgestellte Dokument als authentisch anerkannt.

Die durch das Computersystem 220 empfangene Blockchain-Struktur 100 kann insbesondere auch für Prüfungen im Offline-Modus genutzt werden, d.h. wenn das Netzwerk 240 temporär nicht zur Verfügung steht. So können Daten, welche mithilfe der Blockchain-Struktur 100 auf ihre Authentizität zu überprüfen sind, beispielsweise durch das Computersystem 220 direkt empfangen oder eingelesen werden, ohne Netzwerk 240. Diese Daten können dann unter Verwendung der Blockchain-Struktur 100 auf ihre Authentizität überprüft werden.

Bezugszeichenliste

| | |
|---|---|
| 100 | Blockchain-Struktur |
| 102 | erste Block |
| 104 | zweiter Block |
| 106 | vorvorletzter Block |
| 108 | vorletzter Block |
| 110 | letzter Block |
| 112 | zusätzlicher Block |
| 120 | Funktion |
| 121 | Funktion |
| 122 | bidirektionale Verkettungsfunktion |
| 130 | erweiterte Blockchain-Struktur |
| 140 | Block |
| 142 | inneres Kettensegment |
| 143 | kombinierte bidirektionale Verkettungsfunktion |
| 144 | Block |
| 150 | verkürzte Blockchain-Struktur |
| 160 | Matrixstruktur |
| 162 | Spalte |
| 170 | Matrixstruktur |
| 172 | Zeile |
| 200 | Computersystem |
| 202 | Prozessor |
| 204 | Programminstruktionen |
| 206 | Speicher |
| 208 | Kryptographische Funktionen |
| 209 | Funktionenschar |
| 210 | Daten |
| 214 | Kommunikationsschnittstelle |
| 220 | Computersystem |
| 222 | Prozessor |
| 224 | Programminstruktionen |
| 226 | Speicher |
| 234 | Kommunikationsschnittstelle |
| 240 | Netzwerk |
| 250 | Computersystem |
| 252 | Prozessor |
| 254 | Programminstruktionen |
| 256 | Speicher |
| 264 | Kommunikationsschnittstelle |
| 266 | Sensor |

**Patentansprüche**

1. Verfahren zum manipulationssicheren Speichern von Daten in einem elektronischen Speicher unter Verwendung einer bidirektional verketteten Blockchain-Struktur (100), wobei das Verfahren umfasst:

   • Bereitstellen der bidirektional verketteten Blockchain-Struktur (100),
   • Bereitstellen der zu speichernden Daten (210),
   • Bereitstellen einer ersten Funktionenschar (209), welche eine Mehrzahl von Funktionen umfasst, wobei sich die Funktionen in mindestens einem ersten Parameter unterscheiden und unter Verwendung des jeweiligen ersten Parameters eindeutig identifizierbar sind,
   • Erzeugen eines zusätzlichen Blocks (112) zum Erweitern der Blockchain-Struktur (100), welcher die zu speichernden Daten (210) umfasst und dazu vorgesehen ist mit dem letzten Block (110) der Blockchain-Struktur (100) bidirektional verkettet zu werden, wobei der letzte Block (110) der Blockchain-Struktur (100) gespeicherte Daten umfasst,
   • Erstellen einer ersten blockabhängigen bidirektionalen Verkettungsfunktion (122) zum bidirektionalen Verketten des letzten Blocks (110) mit dem zusätzlichen Block (112), wobei das Erstellen der ersten Verkettungsfunktion (122) umfasst:

      o Berechnen zumindest eines ersten Prüfwerts für den letzten und den zusätzlichen Block (110, 112) unter Verwendung der in dem letzten Block (110) gespeicherten Daten und der in dem zusätzlichen Block (112) zu speichernden Daten (210),
      o Auswählen einer ersten Funktion (120) der ersten Funktionenschar (209) in Abhängigkeit von dem ersten Prüfwert gemäß einer ersten eindeutigen Zuordnungsbedingung zwischen dem ersten Parameter der ausgewählten ersten Funktion (120) und dem ersten Prüfwert,
      o Verwenden der ausgewählten ersten Funktion (120) zum Erstellen der ersten blockabhängigen bidirektionalen Verkettungsfunktion (122),

   • Bidirektionales Verketten des letzten Blocks (110) mit dem zusätzlichen Block (112), wobei das bidirektionale Verketten umfasst:

o Hinzufügen der ersten blockabhängigen bidirektionalen Verkettungsfunktion (122) zu dem letzten Block (110),
o Hinzufügen der ersten blockabhängigen bidirektionalen Verkettungsfunktion (122) zu dem zusätzlichen Block (112),

• Speichern der um den zusätzlichen Block (112) erweiterten Blockchain-Struktur (130).

2. Verfahren nach Anspruch 1, wobei das Verwenden der ausgewählten ersten Funktion (120) zum Erstellen der ersten blockabhängigen bidirektionalen Verkettungsfunktion (122) ein Verwenden der ausgewählten Funktion (120) als erste blockabhängige bidirektionale Verkettungsfunktion (122) umfasst.

3. Verfahren nach einem der vorangehenden Ansprüche, wobei der erste Prüfwert ein kombinierter Prüfwert ist, welcher sowohl von den in dem letzten Block (110) gespeicherten Daten als auch von den in dem zusätzlichen Block (112) zu speichernden Daten (210) abhängt.

4. Verfahren nach Anspruch 3, wobei die Daten in den Blöcken der Blockchain-Struktur (100) jeweils in einer quadratische (TxT)-Matrixstruktur (160, 170) gespeichert sind, wobei T eine natürliche Zahl größergleich zwei ist, wobei das Berechnen des ersten Prüfwerts umfasst:

o Berechnen einer Summe über jede Spalte (162) einer ersten Matrixstruktur (160), welche von den beiden Matrixstrukturen (160, 170) der in dem letzten Block (110) gespeicherten Daten und der in dem zusätzlichen Block (112) zu speichernden Daten (210) bereitgestellt wird,
o Berechnen einer Summe über jede Zeile (172) einer zweiten Matrixstruktur (170), welche von den beiden Matrixstrukturen (160, 170) der in dem letzten Block (110) gespeicherten Daten und der in dem zusätzlichen Block (112) zu speichernden Daten (210) bereitgestellt wird,
o Berechnen der kombinierten Summe aus der Summe der i-ten Spalte und der Summe der i-ten Zeile, wobei i eine natürliche Zahl ist und von 1 bis T läuft,
o Bilden des ersten blockabhängigen Prüfwerts durch Verknüpfen der kombinierten Summen miteinander,

wobei vorzugsweise das Verknüpfen der kombinierten Summen miteinander ein Aneinanderreihen der kombinierten Summen umfasst.

5. Verfahren nach Anspruch 1, wobei sich die Funktionen der ersten Funktionenschar (209) in einer Mehrzahl von n Parametern unterscheiden und unter Verwendung der jeweiligen n Parameter, welche ein n-Tupel von Parametern bilden, eindeutig identifizierbar sind, wobei die n-Tupel von Parametern jeweils den ersten Parameter umfassen,

wobei das Erstellen der ersten blockabhängigen bidirektionalen Verkettungsfunktion (122) ferner umfasst:

o Berechnen eines n-Tupels von Prüfwerten für den letzten und den zusätzlichen Block (110, 112) unter Verwendung der in dem letzten Block (110) gespeicherten Daten und der in dem zusätzlichen Block (112) zu speichernden Daten (210), wobei das n-Tupel den ersten Prüfwert umfasst,
o Auswählen der ersten Funktion (120) der ersten Funktionenschar (209) in Abhängigkeit von dem n-Tupel von Prüfwerten gemäß einer ersten eindeutigen Zuordnungsbedingung zwischen dem n-Tupel von Parametern der ausgewählten ersten Funktion (120) und dem n-Tupel von Prüfwerten, oder

wobei das Verfahren ferner umfasst:

• Bereitstellen einer zweiten Funktionenschar (209), welche eine Mehrzahl von Funktionen umfasst, wobei sich die Funktionen in mindestens einem zweiten Parameter unterscheiden und unter Verwendung des zweiten Parameters jeweils eindeutig identifizierbar sind,

wobei das Erstellen der ersten blockabhängigen bidirektionalen Verkettungsfunktion (122) ferner umfasst:

o Berechnen eines zweiten Prüfwerts unter Verwendung der in dem zusätzlichen Block (112) zu speichernden Daten (210), wobei das Berechnen des ersten Prüfwerts unter Verwendung der in dem letzten Block (110) gespeicherten Daten erfolgt,
o Auswählen einer zweiten Funktion (121) der zweiten Funktionenschar (209) in Abhängigkeit von dem zweiten Prüfwert gemäß einer zweiten eindeutigen Zuordnungsbedingung zwischen dem zweiten Parameter der ausgewählten zweiten Funktion (121) und dem zweiten Prüfwert,
o Verwenden der ausgewählten zweiten Funktion (121) zum Erstellen der ersten blockabhängigen bidirektionalen Verkettungsfunktion (122), wobei die erste blockabhängige bidirektionale Verkettungsfunktion (122) eine eindeutige Kombination der ersten und zweiten ausgewählten Funktion (120, 121) umfasst.

6. Verfahren nach einem der vorangehenden Ansprüche, wobei die erste Zuordnungsbedingung und/oder die zweite Zuordnungsbedingung jeweils eine lineare Funktion umfasst,
wobei vorzugsweise die erste Zuordnungsbedingung und/oder die zweite Zuordnungsbedingung eine Identität umfasst.

7. Verfahren nach einem der vorangehenden Ansprüche, wobei die Funktionen der ersten Funktionenschar (209) und/oder die Funktionen der zweiten Funktionenschar (209) jeweils ein Polynom umfassen, wobei der erste Parameter und/oder der zweite Parameter der Grad der Polynome ist,

wobei es sich vorzugsweise bei den von den Funktionen der ersten Funktionenschar (209) und/oder den Funktionen der zweiten Funktionenschar (209) umfassten Polynomen um Hermitesche Polynome, Legendre Polynome, Laguerre Polynome, Tschebyschow Polynome oder um Polynome diskreter Fourier Transformationen handelt, und/oder
wobei die Funktionen der ersten Funktionenschar (209) und/oder die Funktionen der zweiten Funktionenschar (209) jeweils eine Kugelflächenfunktion umfassen und der erste Parameter und/oder der zweite Parameter ein Index der Kugelflächenfunktionen ist, und/oder
wobei die Funktionen der ersten Funktionenschar (209) und/oder die Funktionen der zweiten Funktionenschar (209) jeweils eine Gaußfunktion umfassen und der erste Parameter und/oder der zweite Parameter die Breite der Gaußfunktionen ist.

8. Verfahren nach einem der vorangehenden Ansprüche, wobei der letzte Block (110) der Blockchain-Struktur (100) ferner eine zweite blockabhängige bidirektionale Verkettungsfunktion der bidirektionalen Verkettung des letzten Blocks (110) mit einem vorletzten Block (108) der Blockchain-Struktur (100) umfasst,

wobei das Hinzufügen der ersten blockabhängigen bidirektionalen Verkettungsfunktion (122) zu dem letzten Block (110) ein Verknüpfen der ersten Verkettungsfunktion (122) mit der zweiten Verkettungsfunktion umfasst, und/oder
wobei das Berechnen des ersten und/oder zweiten Prüfwerts ein Anwenden einer Hashfunktion auf die in dem letzten Block (110) gespeicherten Daten und/oder die in dem zusätzlichen Block (112) zu speichernden Daten (210) umfasst, und/oder

wobei aufeinanderfolgende Blöcke der bidirektional verketteten Blockchain-Struktur (100) jeweils bidirektional miteinander verkettet sind, wobei zwei bidirektional miteinander verkettete Blöcke jeweils beide eine gemeinsame blockabhängige bidirektionale Verkettungsfunktion (122) umfassen, wobei die gemeinsame blockabhängige bidirektionale Verkettungsfunktion (122) jeweils von den in beiden bidirektional miteinander verketteten Blöcke gespeicherten Daten abhängig ist.

9. Verfahren nach einem der vorangehenden Ansprüche, wobei das Verfahren ferner ein Erstellen einer verkürzten Kopie (150) der bidirektional verketteten Blockchain-Struktur (100) umfasst, wobei in der verkürzten Blockchain-Struktur (150) gegenüber der Blockchain-Struktur (100) um zumindest ein inneres Kettensegment (140) verkürzt ist, wobei das innere Kettensegment (142) zumindest einen Block umfasst, wobei zwei verbleibende direkte Nachbarblöcke (140, 144) der verkürzten Blockchain-Struktur (150), zwischen denen das innere Kettensegment (142) entnommen wurde, mit einer kombinierten bidirektionalen Verkettungsfunktion (143) verketten werden, welche eine Kombination aller blockabhängigen bidirektionalen Verkettungsfunktionen der Blöcke des entnommen inneren Kettensegments (142) umfasst,
wobei vorzugsweise das entfernte innere Kettensegment (142) eine Mehrzahl von Blöcken der bidirektional verketteten Blockchain-Struktur (100) umfasst.

10. Verfahren nach Anspruch 9, wobei das Verfahren ferner umfasst:

• Bereitstellen des entnommenen inneren Kettensegments (142),
• Prüfen der Authentizität und/oder Vollständigkeit des bereitgestellten inneren Kettensegments (142), wobei die Prüfung einen Vergleich der kombinierten bidirektionalen Verkettungsfunktion der beiden verbleibenden direkten Nachbarblöcke (140, 144) der verkürzten Blockchain-Struktur (150) mit einer Kombination aller blockabhängigen bidirektionalen Verkettungsfunktionen (143) der Blöcke des bereitgestellten inneren Kettensegments (142) umfasst.

11. Verfahren nach Anspruch 10, wobei auf eine erfolgreiche Prüfung der Authentizität und/oder Vollständigkeit des bereitgestellten inneren Kettensegments (142) hin, die verkürzte Blockchain-Struktur (150) um das bereitgestellte innere Kettensegment (142) ergänzt wird und die kombinierte bidirektionale Verkettungsfunktion (143) zwischen den beiden verbleibenden direkten Nachbarblöcke (140, 144) der verkürzten Blockchain-Struktur (150) jeweils durch die ursprünglichen blockabhängigen bidirektionalen Verkettungsfunktionen der beiden Nachbarblöcke (140, 144) zu dem entnommen inneren Kettensegment (142) ersetzt wird.

12. Verfahren nach einem der vorangehenden Ansprüche, wobei die zu speichernden Daten (210) Daten umfassen, welche kennzeichnend für den Inhalt eines digital codierten Dokuments sind, wobei das Bereitstellen der zu speichernden Daten (210) ein Empfangen der Daten mittels einer Kommunikationsschnittstelle (214) über ein Netzwerk (240) von einem das digital codierte Dokument erstellenden Computersystem (250) umfasst, wobei das Verfahren ferner umfasst:

• Empfangen einer Anfrage nach einer aktuellen Version der Blockchain-Struktur (100) mittels der Kommunikationsschnittstelle (214) über das Netzwerk (240) von einem anfragenden Computersystem (220),
• Versenden der erweiterten Blockchain-Struktur (130) mittels der Kommunikationsschnittstelle (214) über das Netzwerk (240) an das anfragende Computersystem (220) in Antwort auf die empfangene Anfrage, oder

wobei die zu speichernden Daten (210) Daten einer Transaktion umfassen, wobei das Bereitstellen der zu speichernden Daten (210) ein Empfangen der Daten mittels einer Kommunikationsschnittstelle (214) über ein Netzwerk (240) von einem an der Ausführung der Transaktion beteiligten Computersystem (250) umfasst, wobei das Verfahren ferner umfasst:

• Empfangen einer Anfrage nach einer aktuellen Version der Blockchain-Struktur (100) mittels der Kommunikationsschnittstelle (214) über das Netzwerk (240) von einem anfragenden Computersystem (220),
• Versenden der erweiterten Blockchain-Struktur (130) mittels der Kommunikationsschnittstelle (214) über das Netzwerk (240) an das anfragende Computersystem (220) in Antwort auf die empfangene Anfrage, oder

wobei die zu speichernden Daten (210) Zustandsdaten einer Vorrichtung umfassen, wobei das Bereitstellen der zu speichernden Daten (210) ein Empfangen der Daten mittels einer Kommunikationsschnittstelle (214) über ein Netzwerk (240) von einem die Zustandsdaten mittels eines Sensors (266) erfassenden Computersystem (250) umfasst, wobei das Verfahren ferner umfasst:

• Empfangen einer Anfrage nach einer aktuellen Version der Blockchain-Struktur (100) mittels der Kommunikationsschnittstelle (214) über das Netzwerk (240) von einem anfragenden Computersystem (250),
• Versenden der erweiterten Blockchain-Struktur (130) mittels der Kommunikationsschnittstelle (214) über das Netzwerk (240) an das anfragende Computersystem (250) in Antwort auf die empfangene Anfrage, oder

wobei die zu speichernden Daten (210) Daten umfassen, welche einen Bearbeitungsvorgang eines digital codierten Dokuments kennzeichnen, wobei das Bereitstellen der Blockchain-Struktur (100) ein Empfangen des zu bearbeitenden Dokuments, welche die Blockchain-Struktur (100) umfasst, und ein Auslesen der Blockchain-Struktur (100) aus dem empfangenen Dokument umfasst, wobei das Bereitstellen der zu speichernden Daten (210) ein Bearbeiten des empfangenen Dokuments und ein Erzeugen der Daten umfasst, wobei das Speichern der erweiterten Blockchain-Struktur (130) ein Hinzufügen der erweiterten Blockchain-Struktur (130) zu dem bearbeiteten Dokument und ein Speichern des bearbeiteten Dokuments mit der erweiterten Blockchain-Struktur (130) umfasst,
wobei das Verfahren vorzugsweise ferner umfasst:

• Empfangen einer Anfrage nach dem bearbeiteten Dokument mittels einer Kommunikationsschnittstelle (214) über ein Netzwerk (240) von einem anfragenden Computersystem (220),
• Versenden des bearbeiteten Dokuments mit der erweiterten Blockchain-Struktur (130) mittels der Kommunikationsschnittstelle (214) über das Netzwerk (240) an das anfragende Computersystem (220) in Antwort auf die empfangene Anfrage.

13. Elektronisches Datenspeichersystem (200) zum manipulationssicheren Speichern von Daten (210) in einer bidirektional verketteten Blockchain-Struktur (100), wobei das Datenspeichersystem einen Prozessor (202) und einen elektronischen Speicher (206) mit maschinenlesbaren Instruktionen (204) umfasst, wobei ein Ausführen der maschinenlesbaren Instruktionen (204) durch den Prozessor (202) das Datenspeichersystem (200) dazu veranlasst, ein Verfahren auszuführen, welches umfasst:

• Bereitstellen der bidirektional verketteten Blockchain-Struktur (100),
• Bereitstellen der zu speichernden Daten (210),
• Bereitstellen einer ersten Funktionenschar (209), welche eine Mehrzahl von Funktionen umfasst, wobei sich die Funktionen in mindestens einem ersten Parameter unterscheiden und unter Verwendung des jeweiligen ersten Parameters eindeutig identifizierbar sind,

• Erzeugen eines zusätzlichen Blocks (112) zum Erweitern der Blockchain-Struktur (100), welcher die zu speichernden Daten (210) umfasst und dazu vorgesehen ist mit dem letzten Block (110) der Blockchain-Struktur (100) bidirektional verkettet zu werden, wobei der letzte Block (110) der Blockchain-Struktur (100) gespeicherte Daten umfasst,

• Erstellen einer ersten blockabhängigen bidirektionalen Verkettungsfunktion (122) zum bidirektionalen Verketten des letzten Blocks (110) mit dem zusätzlichen Block (112), wobei das Erstellen der ersten Verkettungsfunktion (122) umfasst:

    ∘ Berechnen zumindest eines ersten Prüfwerts für den letzten und den zusätzlichen Block (110, 112) unter Verwendung der in dem letzten Block (110) gespeicherten Daten und der in dem zusätzlichen Block (112) zu speichernden Daten (210),

    ∘ Auswählen einer ersten Funktion (120) der ersten Funktionenschar (209) in Abhängigkeit von dem ersten Prüfwert gemäß einer ersten eindeutigen Zuordnungsbedingung zwischen dem ersten Parameter der ausgewählten ersten Funktion (120) und dem ersten Prüfwert,

    ∘ Verwenden der ausgewählten ersten Funktion (120) zum Erstellen der ersten blockabhängigen bidirektionalen Verkettungsfunktion (122),

• Bidirektionales Verketten des letzten Blocks (110) mit dem zusätzlichen Block (112), wobei das bidirektionale Verketten umfasst:

    ∘ Hinzufügen der ersten blockabhängigen bidirektionalen Verkettungsfunktion (122) zu dem letzten Block (110),

    ∘ Hinzufügen der ersten blockabhängigen bidirektionalen Verkettungsfunktion (122) zu dem zusätzlichen Block (112),

• Speichern der um den zusätzlichen Block (112) erweiterten Blockchain-Struktur (130).

14. Telekommunikationssystem, welches ein elektronisches Datenspeichersystem (200) nach Anspruch 13 und eine Kommunikationsschnittstelle (214) zum Kommunizieren über ein Netzwerk (240) umfasst, wobei das Bereitstellen der zu speichernden Daten (210) ein Empfangen der Daten mittels einer Kommunikationsschnittstelle (214) über ein Netzwerk (240) umfasst, wobei das ausgeführte Verfahren ferner umfasst:

• Empfangen einer Anfrage nach einer aktuellen Version der Blockchain-Struktur (100) mittels der Kommunikationsschnittstelle (214) über das Netzwerk (240) von einem anfragenden Telekommunikationssystem (220),

• Versenden der erweiterten Blockchain-Struktur (130) mittels der Kommunikationsschnittstelle (214) über das Netzwerk (240) an das anfragende Telekommunikationssystem (220) in Antwort auf die empfangene Anfrage.

15. Telekommunikationssystem, welches ein elektronisches Datenspeichersystem (200) nach Anspruch 13 und eine Kommunikationsschnittstelle (214) zum Kommunizieren über ein Netzwerk (240) umfasst, wobei die zu speichernden Daten (210) Daten umfassen, welche einen Bearbeitungsvorgang eines digital codierten Dokuments kennzeichnen, wobei das Bereitstellen der Blockchain-Struktur (100) ein Empfangen des zu bearbeitenden Dokuments, welche die Blockchain-Struktur (100) umfasst, und ein Auslesen der Blockchain-Struktur (100) aus dem empfangenen Dokument umfasst, wobei das Bereitstellen der zu speichernden Daten (210) ein Bearbeiten des empfangenen Dokuments und ein Erzeugen der Daten umfasst, wobei das Speichern der erweiterten Blockchain-Struktur (130) ein Hinzufügen der erweiterten Blockchain-Struktur (130) zu dem bearbeiteten Dokument und ein Speichern des bearbeiteten Dokuments mit der erweiterten Blockchain-Struktur (130) umfasst, wobei das ausgeführte Verfahren ferner umfasst:

• Empfangen einer Anfrage nach dem bearbeiteten Dokument mittels der Kommunikationsschnittstelle (214) über das Netzwerk (240) von einem anfragenden Telekommunikationssystem (220),

• Versenden des bearbeiteten Dokuments mit der erweiterten Blockchain-Struktur (130) mittels der Kommunikationsschnittstelle (214) über das Netzwerk (240) an das anfragende Telekommunikationssystem (220) in Antwort auf die empfangene Anfrage.

## Claims

1. A method for the tamper-proof storing of data in an electronic store using a bidirectionally linked blockchain structure (100), wherein the method comprises the steps of:

• providing the bidirectionally linked blockchain structure (100),
• providing the data (210) to be stored,
• providing a first family of functions (209), which comprises a plurality of functions, wherein the functions differ by at least one first parameter and are uniquely identifiable using the first parameter of each,

• generating an additional block (112) to extend the blockchain structure (100), which block comprises the data to be stored (210) and is intended to be bidirectionally linked to the last block (110) of the blockchain structure (100), wherein the last block (110) of the blockchain structure (100) comprises stored data,

• creating a first block-dependent bidirectional linking function (122) for bidirectionally linking the last block (110) to the additional block (112), wherein the creation of the first linking function (122) comprises the steps of:

  ○ calculating at least one first check value for the last and the additional blocks (110, 112) using the data stored in the last block (110) and the data (210) to be stored in the additional block (112),
  ○ selecting a first function (120) from the first family of functions (209) depending on the first check value in accordance with a first unique assignment condition between the first parameter of the selected first function (120) and the first check value,
  ○ using the selected first function (120) for creating the first block-dependent bidirectional linking function (122),

• bidirectionally linking the last block (110) to the additional block (112), wherein the bidirectional linking comprises the steps of:

  ○ adding the first block-dependent bidirectional linking function (122) to the last block (110),
  ○ adding the first block-dependent bidirectional linking function (122) to the additional block (112),

• storing the blockchain structure (130) extended by the additional block (112).

2. The method according to claim 1, wherein the use of the selected first function (120) to create the first block-dependent bidirectional linking function (122) comprises a use of the selected function (120) as first block-dependent bidirectional linking function (122).

3. The method according to one of the preceding claims, wherein the first check value is a combined check value which is dependent both on the data stored in the last block (110) and on the data (210) to be stored in the additional block (112).

4. The method according to claim 3, wherein the data are stored in the blocks of the blockchain structure (100) in each case in a square (TxT) matrix structure (160, 170), wherein T is a natural number greater than or equal to two, wherein the calculation of the first check value comprises the steps of:

  ○ calculating a sum over each column (162) of a first matrix structure (160) which is provided by the two matrix structures (160, 170) of the data stored in the last block (110) and the data (210) to be stored in the additional block (112),
  ○ calculating a sum over each column (172) of a second matrix structure (170) which is provided by the two matrix structures (160, 170) of the data stored in the last block (110) and the data (210) to be stored in the additional block (112),
  ○ calculating the combined sum from the sum of the i-th column and the sum of the i-th row, wherein i is a natural number and runs from 1 to T,
  ○ forming the first block-dependent check value by linking the combined sums to one another,

wherein the linking of the combined sums to one another comprises a stringing together of the combined sums.

5. The method according to claim 1, wherein the functions of the first family of functions (209) differ by a multiplicity of n parameters and are uniquely identifiable using the corresponding n parameters, which form an n-tuple of parameters, wherein the n-tuple of parameters each comprise the first parameter,

  wherein the creation of the first block-dependent bidirectional linking function (122) also comprises the steps of:

    ○ calculating an n-tuple of check values for the last and the additional blocks (110, 112) using the data stored in the last block (110) and the data (210) to be stored in the additional block (112), wherein the n-tuple comprises the first check value,
    ○ selecting the first function (120) of the first family of functions (209) depending on the n-tuple of check values in accordance with a first unique assignment condition between the n-tuple of parameters of the selected first function (120) and the n-tuple of check values, or

  wherein the method also comprises the step of:

    • providing a second family of functions (209), which comprises a plurality of functions, wherein the functions differ by at least one second parameter and are uniquely identifiable using the second parameter of each,

wherein the creation of the first block-dependent bidirectional linking function (122) also comprises the steps of:

   ◦ calculating a second check value using the data (210) to be stored in the additional block (112), wherein the first check value is calculated using the data stored in the last block (110),

   ◦ selecting a second function (121) from the second family of functions (209) depending on the second check value in accordance with a second unique assignment condition between the second parameter of the selected second function (121) and the second check value,

   ◦ using the selected second function (121) to create the first block-dependent bidirectional linking function (122), wherein the first block-dependent bidirectional linking function (122) comprises a unique combination of the first and second selected function (120, 121).

6. The method according to any one of the preceding claims, wherein the first assignment condition and/or the second assignment condition each comprise a linear function,
wherein the first assignment condition and/or the second assignment condition preferably comprises an identity.

7. The method according to any one of the preceding claims, wherein the functions of the first family of functions (209) and/or the functions of the second family of functions (209) each comprise a polynomial, wherein the first parameter and/or the second parameter is the degree of the polynomial,

wherein the polynomials comprised by the functions of the first family of functions (209) and/or the functions of the second family of functions (209) are preferably Hermite polynomials, Legendre polynomials, Laguerre polynomials, Chebyshev polynomials or discrete Fourier transform polynomials, and/or
wherein the functions of the first family of functions (209) and/or the functions of the second family of functions (209) each comprise a spherical harmonic, and the first parameter and/or the second parameter is an index of the spherical harmonic, and/or
wherein the functions of the first family of functions (209) and/or the functions of the second family of functions (209) each comprise a Gaussian function, and the first parameter and/or the second parameter is the width of the Gaussian functions.

8. The method according to any one of the preceding claims, wherein the last block (110) of the blockchain structure (100) also comprises a second block-dependent bidirectional linking function of the bidirectional linking of the last block (110) to a penultimate block (108) of the blockchain structure (100),

wherein the addition of the first block-dependent bidirectional linking function (122) to the last block (110) comprises a linking of the first linking function (122) to the second linking function, and/or
wherein the calculation of the first and/or second check value comprises an application of a hash function to the data stored in the last block (110) and/or the data (210) to be stored in the additional block (112), and/or
wherein successive blocks of the bidirectionally linked blockchain structure (100) are each linked bidirectionally to one another, wherein two blocks bidirectionally linked to one another each comprise a common block-dependent bidirectional linking function (122), wherein the common block-dependent bidirectional linking function (122) is dependent in each case on the data stored in both blocks bidirectionally linked to one another.

9. The method according to any one of the preceding claims, wherein the method also comprises a creation of a shortened copy (150) of the bidirectionally linked blockchain structure (100), wherein the shortened blockchain structure (150) is shorter than the blockchain structure (100) by at least one inner chain segment (140), wherein the inner chain segment (142) comprises at least one block, wherein two remaining direct neighbour blocks (140, 144) of the shortened blockchain structure (150), between which the inner chain segment (142) was removed, are linked to a combined bidirectional linking function (143) which comprises a combination of all block-dependent bidirectional linking functions of the blocks of the removed inner chain segment (142), wherein the removed inner chain segment (142) preferably comprises a plurality of blocks of the bidirectionally linked blockchain structure (100).

10. The method according to claim 9, wherein the method also comprises the steps of:

   • providing the removed inner chain segment (142),
   • checking the authenticity and/or completeness of the provided inner chain segment (142), wherein the check comprises a comparison of the combined bidirectional linking function of the two remaining direct neighbour blocks (140, 144) of the shortened blockchain structure (150) with a combination of all block-dependent bidirectional linking functions (143) of the blocks of the provided inner chain segment (142).

11. The method according to claim 10, wherein, in the event of a successful checking of the authenticity and/or completeness of the provided inner chain segment (142), the shortened blockchain structure (150) is supplemented by the provided inner chain segment (142), and the combined bidirectional linking function (143) between the two remaining direct neighbour blocks (140, 144) of the shortened blockchain structure (150) is replaced by the original block-dependent bidirectional linking functions of the two blocks (140, 144) neighbouring the removed inner chain segment (142).

12. The method according to any one of the preceding claims, wherein the data (210) to be stored comprise data which are characterising for the content of a digitally coded document, wherein the provision of the data (210) to be stored comprises a receipt of the data by means of a communications interface (214) via a network (240) from a computer system (250) creating the digitally coded document, wherein the method also comprises the steps of:

> • receiving a request for a current version of the blockchain structure (100) by means of the communications interface (214) via the network (240) from a requesting computer system (220),
> • sending the extended blockchain structure (130) by means of the communications interface (214) via the network (240) to the querying computer system (220) in response to the received query, or

wherein the data (210) to be stored comprise data of a transaction, wherein the provision of the data (210) to be stored comprises a receipt of the data by means of a communications interface (214) via a network (240) from a computer system (250) involved in the execution of the transaction, wherein the method also comprises the steps of:

> • receiving a request for a current version of the blockchain structure (100) by means of the communications interface (214) via the network (240) from a requesting computer system (220),
> • sending the extended blockchain structure (130) by means of the communications interface (214) via the network (240) to the querying computer system (220) in response to the received query, or

wherein the data (210) to be stored comprise status data of a device, wherein the provision of the data (210) to be stored comprises a receipt of the data by means of a communications interface (214) via a network (240) from a computer system (250) detecting the status data by means of a sensor (266), wherein the method also comprises the steps of:

> • receiving a request for a current version of the blockchain structure (100) by means of the communications interface (214) via the network (240) from a requesting computer system (250),
> • sending the extended blockchain structure (130) by means of the communications interface (214) via the network (240) to the querying computer system (250) in response to the received query, or

wherein the data (210) to be stored comprise data which characterise a processing procedure of a digitally coded document, wherein the provision of the blockchain structure (100) comprises a receipt of the document to be processed which comprises the blockchain structure (100) and a reading of the blockchain structure (100) from the received document, wherein the provision of the data (210) to be stored comprises a processing of the received document and a generation of the data, wherein the storing of the extended blockchain structure (130) comprises an addition of the extended blockchain structure (130) to the processed document and a storage of the processed document with the extended blockchain structure (130),
wherein the method also preferably comprises the steps of:

> • receiving a query for the processed document by means of a communications interface (214) via a network (240) from a querying computer system (220),
> • sending the processed document with the extended blockchain structure (130) by means of the communications interface (214) via the network (240) to the querying computer system (220) in response to the received query.

13. An electronic data storage system (200) for tamper-proof storing of data (210) in a bidirectionally linked blockchain structure (100), wherein the data storage system comprises a processor (202) and an electronic store (206) with machine-readable instructions (204), wherein an execution of the machine-readable instructions (204) by the processor (202) prompts the data storage system (200) to execute a method comprising the steps of:

> • providing the bidirectionally linked blockchain structure (100),

• providing the data (210) to be stored,

• providing a first family of functions (209), which comprises a plurality of functions, wherein the functions differ by at least one first parameter and are uniquely identifiable using the first parameter of each,

• generating an additional block (112) to extend the blockchain structure (100), which block comprises the data to be stored (210) and is intended to be bidirectionally linked to the last block (110) of the blockchain structure (100), wherein the last block (110) of the blockchain structure (100) comprises stored data,

• creating a first block-dependent bidirectional linking function (122) for bidirectionally linking the last block (110) to the additional block (112), wherein the creation of the first linking function (122) comprises the steps of:

◦ calculating at least one first check value for the last and the additional blocks (110, 112) using the data stored in the last block (110) and the data (210) to be stored in the additional block (112),

◦ selecting a first function (120) from the first family of functions (209) depending on the first check value in accordance with a first unique assignment condition between the first parameter of the selected first function (120) and the first check value,

◦ using the selected first function (120) for creating the first block-dependent bidirectional linking function (122),

• bidirectionally linking the last block (110) to the additional block (112), wherein the bidirectional linking comprises the steps of:

◦ adding the first block-dependent bidirectional linking function (122) to the last block (110),

◦ adding the first block-dependent bidirectional linking function (122) to the additional block (112),

• storing the blockchain structure (130) extended by the additional block (112).

14. A telecommunications system which comprises an electronic data storage system (200) according to claim 13 and a communications interface (214) for communication via a network (240), wherein the provision of the data (210) to be stored comprises a receipt of the data by means of a communications interface (214) via a network (240), wherein the executed method also comprises the steps of:

• receiving a request for a current version of the blockchain structure (100) by means of the communications interface (214) via the network (240) from a requesting telecommunications system (220),

• sending the extended blockchain structure (130) by means of the communications interface (214) via the network (240) to the querying telecommunications system (220) in response to the received query.

15. A telecommunications system which comprises an electronic data storage system (200) according to claim 13 and a communications interface (214) for communication via a network (240), wherein the data (210) to be stored comprise data which characterise a processing procedure of a digitally coded document, wherein the provision of the blockchain structure (100) comprises a receipt of the document to be processed which comprises the blockchain structure (100) and a reading of the blockchain structure (100) from the received document, wherein the provision of the data (210) to be stored comprises a processing of the received document and a generation of the data, wherein the storing of the extended blockchain structure (130) comprises an addition of the extended blockchain structure (130) to the processed document and a storage of the processed document with the extended blockchain structure (130), wherein the executed method also comprises the steps of:

• receiving a query for the processed document by means of the communications interface (214) via the network (240) from a querying telecommunications system (220),

• sending the processed document with the extended blockchain structure (130) by means of the communications interface (214) via the network (240) to the querying telecommunications system (220) in response to the received query.

**Revendications**

1. Procédé d'enregistrement de données sécurisé contre les manipulations dans une mémoire électronique moyennant l'emploi d'une structure de chaîne de blocs (100) concaténée de manière bidirectionnelle, le procédé comprenant :

• la mise au point de la structure de chaîne de blocs (100) concaténée de manière bidirectionnelle,

• la mise au point des données (210) à enregistrer,

• la mise au point d'un premier ensemble de fonctions (209), lequel comprend une multiplicité de fonctions, où les fonctions se différentient par au moins un premier paramètre et sont identifiables sans équivoque moyennant l'emploi du premier paramètre respectif,

• la création d'un bloc supplémentaire (112) permettant d'élargir la structure de chaîne de blocs (100), lequel comprend les données (210) devant être enregistrées et est prévu pour être concaténé de manière bidirectionnelle avec le dernier bloc (110) de la structure de chaîne de blocs (100), où le dernier bloc (110) de la structure de chaîne de blocs (100) comprend des données enregistrées,

• l'établissement d'une première fonction de concaténation (122) bidirectionnelle dépendante du bloc pour la concaténation bidirectionnelle du dernier bloc (110) avec le bloc supplémentaire (112), où l'établissement de la fonction de concaténation (122) comprend :

    ◦ le calcul d'au moins une première valeur de contrôle pour le dernier et le bloc supplémentaire (110, 112) moyennant l'emploi des données enregistrées dans le dernier bloc (110) et des données (210) à enregistrer dans le bloc supplémentaire (112),

    ◦ le choix d'une première fonction (120) du premier ensemble de fonctions (209) en fonction de la première valeur de contrôle selon une première contribution d'affectation univoque entre le premier paramètre de la première fonction (120) choisie et la première valeur de contrôle,

    ◦ l'emploi de la première fonction (120) choisie pour l'établissement de la première fonction de concaténation (122) bidirectionnelle dépendante du bloc,

• la concaténation bidirectionnelle du dernier bloc (110) avec le bloc supplémentaire (112), où la concaténation bidirectionnelle comprend :

    ◦ l'ajout de la première fonction de concaténation (122) bidirectionnelle dépendante du bloc au dernier bloc (110),

    ◦ l'ajout de la première fonction de concaténation (122) bidirectionnelle dépendante du bloc au bloc supplémentaire (112),

• l'enregistrement de la structure de chaîne de blocs élargie (130) par le bloc supplémentaire (112).

2. Procédé selon la revendication 1, dans lequel l'utilisation de la première fonction (120) choisie pour l'établissement de la première fonction de concaténation (122) bidirectionnelle dépendante du bloc comprend une utilisation de la fonction (120) choisie en tant première fonction de concaténation (122) bidirectionnelle dépendante du bloc.

3. Procédé selon l'une des revendications précédentes, dans lequel la première valeur de contrôle est une valeur de contrôle combinée, laquelle dépend à la fois des données enregistrées dans le dernier bloc (110) et des données (210) à enregistrer dans le bloc supplémentaire (112).

4. Procédé selon la revendication 3, dans lequel les données sont enregistrées dans les blocs de la structure de chaine de blocs (100), respectivement dans une structure de matrice quadratique (TxT) (160, 170), où T est un nombre naturel égal ou supérieur à deux, où le calcul de la première valeur de contrôle comprend :

    ◦ le calcul d'une somme, sur chaque colonne (162), d'une première structure de matrice (160), laquelle est fournie par les deux structures de matrice (160, 170) des données enregistrées dans le dernier bloc (110) et des données (210) à enregistrer dans le bloc supplémentaire (112),

    ◦ le calcul d'une somme, sur chaque rangée (172) d'une deuxième structure de matrice (170), laquelle est fournie par les deux structures de matrice (160, 170) des données enregistrées dans le dernier bloc (110) et des données (210) à enregistrer dans le bloc supplémentaire (112),

    ◦ le calcul de la somme combinée à partir de la somme de la $i^{ème}$ colonne et de la somme de la $i^{ème}$ rangée, où i est un nombre naturel et va de 1 à T,

    ◦ la formation de la première valeur de contrôle dépendante du bloc par l'association des sommes combinées l'une avec l'autre,

dans lequel, de préférence, l'association des sommes combinées les unes avec les autres comprend une accumulation des sommes combinées.

5. Procédé selon la revendication 1, dans lequel les fonctions du premier ensemble de fonctions (209) se différentient par une multiplicité de n paramètres et sont identifiables sans équivoque moyennant l'utilisation des n paramètres respectifs, lesquels forment un n-tuple de paramètres, où les n-tuples de paramètres comprennent respectivement le premier paramètre,

dans lequel l'établissement de la première fonction de concaténation (122) bidirectionnelle dépendante du bloc comprend en outre :

    ◦ le calcul d'un n-tuple de valeurs de contrôle pour le dernier et le bloc supplémentaire (110, 112) moyennant l'emploi des données enregistrées dans le dernier bloc (110) et des données (210) à enregistrer dans le bloc supplémentaire (112), où le n-tuple comprend la première valeur de contrôle,

◦ la sélection de la première fonction (120) du premier ensemble de fonctions (209) en fonction du n-tuple de valeurs de contrôle selon une contribution d'affectation univoque entre le n-tuple de paramètres de la première fonction (120) sélectionnée et le n-tuple de valeurs de contrôle, ou

où le procédé comprend en outre :

• la mise au point d'un deuxième ensemble de fonctions (209), lequel comprend une multiplicité de fonctions, où les fonctions se différentient par au moins un deuxième paramètre et sont identifiables sans équivoque respectivement moyennant l'emploi du deuxième paramètre,

dans lequel l'établissement de la première fonction de concaténation (122) bidirectionnelle dépendant du bloc comprend en outre :

◦ le calcul d'au moins une deuxième valeur de contrôle moyennant l'emploi des données (210) à enregistrer dans le bloc supplémentaire (112), où le calcul de la première valeur de contrôle a lieu moyennant l'utilisation des données enregistrées dans le dernier bloc (110),

◦ le choix d'une deuxième fonction (121) du deuxième ensemble de fonctions (209) en fonction de la deuxième valeur de contrôle selon une deuxième contribution d'affectation univoque entre le deuxième paramètre de la deuxième fonction (121) choisie et la deuxième valeur de contrôle,

◦ l'emploi de la deuxième fonction (121) choisie pour l'établissement de la première fonction de concaténation (122) bidirectionnelle dépendante du bloc, où la première fonction de concaténation (122) bidirectionnelle dépendante du bloc comprend une combinaison sans équivoque de la première et de la deuxième fonction (120, 121).

6. Procédé selon l'une des revendications précédentes, dans lequel la première condition d'affectation et/ou la deuxième condition d'affectation comprennent respectivement une fonction linéaire, dans lequel, de préférence, la première condition d'affectation et/ou la deuxième condition d'affectation comprennent une identité.

7. Procédé selon l'une des revendications précédentes, dans lequel les fonctions du premier ensemble de fonctions (209) et/ou les fonctions du deuxième ensemble de fonctions (209) comprennent respectivement un polynôme, où le premier paramètre, et/ou le deuxième paramètre, est le degré du polynôme,

dans lequel, de préférence, dans le cas des polynômes impliqués par les fonctions du premier ensemble de fonctions (209) et/ou les fonctions du deuxième ensemble de fonctions (209), il s'agit de polynômes d'Hermite, de polynômes de Legendre, de polynômes de Laguerre, de polynômes de Tchebychev ou de transformations de Fourier discrètes de polynômes, et/ou dans lequel les fonctions du premier ensemble de fonctions (209) et/ou les fonctions du deuxième ensemble de fonctions (209) comprennent respectivement une fonction harmonique sphérique et le premier paramètre et/ou le deuxième paramètre sont des indices des fonctions harmoniques sphériques, et/ou dans lequel les fonctions du premier ensemble de fonctions (209) et/ou les fonctions du deuxième ensemble de fonctions (209) comprennent respectivement une fonction de Gauss et le premier paramètre, et/ou le deuxième paramètre, est la largeur des fonctions de Gauss.

8. Procédé selon l'une des revendications précédentes, dans lequel le dernier bloc (110) de la structure de chaîne de blocs (100) comprend en outre une deuxième fonction de concaténation bidirectionnelle dépendante du bloc de la concaténation bidirectionnelle du dernier bloc (110) avec un avant-dernier bloc (108) de la structure de chaîne de blocs (100),

dans lequel l'ajout de la première fonction de concaténation (122) bidirectionnelle dépendante du bloc au dernier bloc (110) comprend une combinaison de la première fonction de concaténation (122) avec la deuxième fonction de concaténation, et/ou dans lequel le calcul de la première, et/ou de la deuxième valeur de contrôle, comprend un emploi d'une fonction de hachage pour les données enregistrées dans le dernier bloc (110) et les données (210) à enregistrer dans le bloc supplémentaire (112), et/ou dans lequel des blocs successifs de la structure de chaine de blocs (100) concaténée de manière bidirectionnelle sont respectivement concaténés les uns aux autres de manière bidirectionnelle, où deux blocs concaténés l'un avec l'autre de manière bidirectionnelle comprennent respectivement une fonction de concaténation (122) bidirectionnelle dépendante du bloc commune, où la fonction de concaténation (122) bidirectionnelle dépendante du bloc commune est respectivement dépendante des données enregistrées dans les deux blocs concaténés l'un avec l'autre de manière bidirectionnelle.

**9.** Procédé selon l'une des revendications précédentes, où le procédé comprend en outre l'établissement d'une copie raccourcie (150) de la structure de chaine de blocs (100) concaténée de manière bidirectionnelle, où, dans la structure de chaine de blocs raccourcie (150), est raccourci par rapport à la structure de chaine de blocs (100) d'au moins un segment de chaine (140) interne, où le segment de chaine (142) interne comprend au moins un bloc, où deux blocs voisins directs restants (140, 144) de la structure de chaine de blocs raccourcie (150, entre lesquels le segment de chaine (142) interne a été prélevé, sont concaténés avec une fonction de concaténation (143) bidirectionnelle combinée, laquelle comprend une combinaison de toutes les fonctions de concaténation bidirectionnelles dépendantes de blocs des blocs du segment de chaine (142) interne prélevé,

dans lequel, de préférence, le segment de chaine (142) interne prélevé comprend une multiplicité de blocs de la structure de chaine de blocs concaténée de manière bidirectionnelle.

**10.** Procédé selon la revendication 9, où le procédé comprend en outre :

• la mise au point du segment de chaine (142) interne prélevé,
• la vérification de l'authenticité et/ou de l'exhaustivité du segment de chaîne (142) interne mis au point, où la vérification comprend une comparaison de la fonction de concaténation bidirectionnelle combinée des deux blocs directement voisins (140, 144) restants de la structure de chaine de blocs (150) raccourcie avec une combinaison de toutes les fonctions de concaténation (143) bidirectionnelles dépendantes de blocs des blocs du segment de chaîne (142) interne mis au point.

**11.** Procédé selon la revendication 10, dans lequel, suite à une vérification réussie de l'authenticité et/ou de l'exhaustivité du segment de chaine (142) interne mis au point, la structure de chaine de blocs raccourcie (150) est complétée par le segment de chaine (142) interne mis au point et la fonction de concaténation (143) bidirectionnelle combinée entre les deux blocs voisins (140, 144) directs restants de la structure de chaine de blocs raccourcie (150) est remplacée respectivement par les fonctions de concaténation bidirectionnelle dépendante de blocs d'origine des deux blocs voisins (140, 144) en plus du segment de chaine (142) interne prélevé.

**12.** Procédé selon l'une des revendications précédentes, dans lequel les données (210) à enregistrer comprennent des données, lesquelles sont caractéristiques pour le contenu d'un document codé numériquement, où la préparation des données (210) à enregistrer comprend une réception des données au moyen d'une interface de communication (214) par le biais d'un réseau (240) à partir d'un système informatique (250) établissant le document codé numériquement, le procédé comprenant en outre :

• la réception d'une demande pour une version actuelle de la structure de chaine de blocs (100) au moyen de l'interface de communication (214) par le biais du réseau (240) par un système informatique (220) demandeur,
• l'envoi de la structure de chaine de blocs élargie (130) au moyen de l'interface de communication (214) par le biais du réseau (240) au système informatique (220) demandeur en réponse à la demande reçue, ou

dans lequel les données (210) à enregistrer comprennent des données d'une transaction, où la préparation des données (210) à enregistrer comprend une réception des données au moyen d'une interface de communication (214) par le biais d'un réseau (240) par un système informatique (250) impliqué dans l'exécution de la transaction, le procédé comprenant en outre :

• la réception d'une demande pour une version actuelle de la structure de chaine de blocs (100) au moyen de l'interface de communication (214) par le biais du réseau (240) par un système informatique (220) demandeur,
• l'envoi de la structure de chaine de blocs élargie (130) au moyen de l'interface de communication (214) par le biais du réseau (240) au système informatique (220) demandeur en réponse à la demande reçue, ou

dans lequel les données (210) à enregistrer comprennent des données d'état d'un dispositif, où la préparation des données (210) à enregistrer comprend la réception des données au moyen d'une l'interface de communication (214) par le biais d'un réseau (240) par un système informatique (250) saisissant les données d'état au moyen d'un capteur (266), le procédé comprenant en outre :

• la réception d'une demande pour une version actuelle de la structure de chaine de blocs (100) au moyen de l'interface de communication (214) par le biais du réseau (240) par un système informatique (250) demandeur,
• l'envoi de la structure de chaine de blocs élargie (130) au moyen de l'interface de communication (214) par le biais du réseau (240) au système informatique (250) demandeur en réponse à la demande reçue, ou

dans lequel les données (210) à enregistrer comprennent des données, lesquelles caractérisent un processus de traitement d'un document codé numériquement, où la préparation de la structure de chaine de blocs (100) comprend une réception du document à traiter, lequel est compris dans la structure de chaine de blocs (100), et une lecture de la structure en chaine de blocs (100) à partir du document reçu, où la préparation des données (210) à enregistrer comprend le traitement du document reçu et une création des données, où l'enregistrement de la structure de chaîne de blocs élargie (130) comprend un ajout de la structure en chaine de blocs élargie (130) au document à traiter et un enregistrement du document à traiter avec la structure en chaine de blocs élargie (130),

le procédé comprenant en outre :

> • la réception d'une demande pour le document à traiter au moyen d'une interface de communication (214) par le biais d'un réseau (240) par un système informatique (220) demandeur,
> • l'envoi du document à traiter avec la structure de chaine de blocs élargie (130) au moyen de l'interface de communication (214) par le biais du réseau (240) au système informatique (220) demandeur en réponse à la demande reçue.

13. Système de stockage de données électronique (200) permettant l'enregistrement de données (210) sécurisé contre les manipulations dans une structure de chaîne de blocs (100) concaténée de manière bidirectionnelle, où le système de stockage de données comprend un processeur (202) et une mémoire électronique (206) dotée d'instructions (204) lisibles par machine, où l'exécution des instructions (204) lisibles par machine par le processeur (202) fait en sorte que le système de stockage de données (200) exécute un procédé, lequel comprend :

> • la mise au point de la structure de chaîne de blocs (100) concaténée de manière bidirectionnelle,
> • la mise au point des données (210) à enregistrer,
> • la mise au point d'un premier ensemble de fonctions (209), lequel comprend une multiplicité de fonctions, où les fonctions se différentient par au moins un premier paramètre et sont identifiables sans équivoque moyennant l'emploi du premier paramètre respectif,
> • la création d'un bloc supplémentaire (112) permettant d'élargir la structure de chaîne de blocs (100), lequel comprend les données (210) devant être enregistrées et est prévu pour être concaténé de manière bidirectionnelle avec le dernier bloc (110) de la structure de chaîne de blocs (100), où le dernier bloc (110) de la structure de chaîne de blocs (100) comprend des données enregistrées,
> • l'établissement d'une première fonction de concaténation (122) bidirectionnelle dépendante du bloc pour la concaténation bidirectionnelle du dernier bloc (110) avec le bloc supplémentaire (112), où l'établissement de la première fonction de concaténation (122) comprend :

>> ◦ le calcul d'au moins une première valeur de contrôle pour le dernier bloc et du bloc supplémentaire (110, 112) moyennant l'emploi des données enregistrées dans le dernier bloc (110) et des données (210) à enregistrer dans le bloc supplémentaire (112),
>> ◦ le choix d'une première fonction (120) du premier ensemble de fonctions (209) en fonction de la première valeur de contrôle selon une première contribution d'affectation univoque entre le premier paramètre de la première fonction (120) choisie et la première valeur de contrôle,
>> ◦ l'emploi de la première fonction (120) choisie pour l'établissement de la première fonction de concaténation (122) bidirectionnelle dépendante du bloc,

> • la concaténation bidirectionnelle du dernier bloc (110) avec le bloc supplémentaire (112), où la concaténation bidirectionnelle comprend :

>> ◦ l'ajout de la première fonction de concaténation (122) bidirectionnelle dépendante du bloc au dernier bloc (110),
>> ◦ l'ajout de la première fonction de concaténation (122) bidirectionnelle dépendante du bloc au bloc supplémentaire (112),

> • l'enregistrement de la structure de chaîne de blocs élargie (130) du bloc supplémentaire (112).

14. Système de télécommunication, lequel comprend un système de stockage de données électronique (200) selon la revendication 13 et une interface de communication (214) permettant de communiquer par le biais d'un réseau (240), où la préparation des données (210) à enregistrer comprend une réception des données au moyen d'une interface de communication (214) par le biais d'un réseau (240), le procédé exécuté comprenant en outre :

> • la réception d'une demande pour une version actuelle de la structure de chaine de blocs (100) au moyen de l'interface de communication (214) par le biais du réseau (240) par un système informatique (220) demandeur,

• l'envoi de la structure de chaine de blocs élargie (130) au moyen de l'interface de communication (214) par le biais du réseau (240) au système informatique (220) demandeur en réponse à la demande reçue.

15. Système de télécommunication, lequel comprend un système de stockage de données électronique (200) selon la revendication 13 et une interface de communication (214) permettant de communiquer par le biais d'un réseau (240), où les données (210) à enregistrer comprennent des données, lesquelles caractérisent un processus de traitement d'un document codé numériquement, où la préparation de la structure de chaine de blocs (100) comprend une réception du document à traiter, lequel est compris dans la structure de chaine de blocs (100), et une lecture de la structure en chaine de blocs (100) à partir du document reçu, où la préparation des données (210) à enregistrer comprend un traitement du document reçu et une création des données, où l'enregistrement de la structure de chaîne de blocs élargie (130) comprend un ajout de la structure en chaine de blocs élargie (130) au document à traiter et un enregistrement du document traité avec la structure de chaine de blocs élargie (130), le procédé exécuté comprenant en outre :

• la réception d'une demande pour le document traité au moyen de l'interface de communication (214) par le biais du réseau (240) par un système de télécommunication (220) demandeur,
• l'envoi du document traité avec la structure de chaine de blocs élargie (130) au moyen de l'interface de communication (214) par le biais du réseau (240) au système de télécommunication (220) demandeur en réponse à la demande reçue.

EP 3 685 301 B1

Fig. 1

Fig. 2

| Bereitstellen Blockchain-Struktur | 400 |
|---|---|

| Bereitstellen zu speichernde Daten | 402 |
|---|---|

| Bereitstellen einer Funktionenschar | 404 |
|---|---|

| Erzeugen zusätzlicher Block | 406 |
|---|---|

| Erstellen blockabhängige Verkettungsfunktion | 408 |
|---|---|

| Hinzufügen Verkettungsfunktion zu letztem Block | 410 |
|---|---|

| Hinzufügen Verkettungsfunktion zu zusätzlichem Block | 412 |
|---|---|

| Speichern der erweiterten Blockchain-Struktur | 414 |
|---|---|

Fig. 3

Fig. 4

| Summieren über Spalten einer 1. Matrixstruktur | 500 |
|---|---|

| Summieren über Zeilen einer 2. Matrixstruktur | 502 |
|---|---|

| Berechnen kombinierter Summen | 504 |
|---|---|

| Erstellen Prüfwert | 506 |
|---|---|

Fig. 5

EP 3 685 301 B1

Fig. 6

| Computersystem | 200 |
| Prozessor | 202 |
| Instruktionen | 204 |
| | 206 |
| Speicher | 208 |
| Krypt. Funktionen | |
| | 209 |
| Funktionenschar | |
| | 210 |
| Daten | 100 |
| Blockchain-Struktur | |
| | 214 |
| Schnittstelle | |

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ARVIND NARAYANAN et al.** *Bitcoin and Cryptocurrency Technologies,* 09. Februar 2016

- Mastering Bitcoin. 161 ff